# EUROPEAN PATENT APPLICATION

(11) **EP 4 280 186 A1**
(43) Date of publication of application: **22.11.2023**
(21) Application number: 23174388.1
(22) Date of filing: 19.05.2023
(51) Int. Cl.: G08B 13/16

(54) **SYSTEM AND METHOD FOR PROCESSING AUDIO DATA OF AIRCRAFT CABIN ENVIRONMENT**

(30) Priority: 20.05.2022 IN 202241029171; 06.10.2022 US 202217961317; 06.10.2022 US 202217961379
(71) Applicant: Arinc Incorporated, Annapolis, MD 21401 (US)
(72) Inventor: GOYAL, Nitin Kumar, Bangalore 560037 (IN); JHA, Ashutosh Kumar, Bangalore 560067 (IN); MUJAHID, Ghafarsab, Bangalore 560037 (IN); SRIKAR, Mardi, Bangalore 560059 (IN)
(74) Representative: Dehns

(57) **Abstract**

A system including an array (104) of audio devices (202) installed in an aircraft cabin and an audio processing device (108). The audio processing device may be configured to: monitor a channel of microphone audio data from each of at least two of the audio devices; analyze the monitored channels of microphone audio data; identify an event to be an occurrence of a predetermined event based at least on the analyzing of the monitored channels of microphone audio data; based at least on the identified event and the analyzing of the monitored channels of microphone audio data, generate an event report associated with at least one channel of microphone audio data associated with the identified event; output the event report to a crew panel (112); and output at least a portion of microphone audio data of the at least one channel of microphone audio data associated with the identified event to the crew panel.

## Description

### BACKGROUND

Currently, some aircraft are equipped with image-based video devices, which stream video to the crew panel, inside cockpit displays, and recorders for monitoring and capturing of events inside the cabin for direct surveillance and for later replay. These video cameras are currently not equipped with analytics systems and do not provide alerts to crew members. Such video devices have some limitations. For example, video cameras have physical restrictions of where the cameras can be installed. Additionally, it is not practical to display a complete view of the cabin on a display all at the same time.

### SUMMARY

In one aspect, embodiments of the inventive concepts disclosed herein are directed to a system. The system may include an array of audio devices installed in an aircraft cabin of an aircraft, each of the audio devices including a microphone, wherein each of the audio devices is configured to output microphone audio data on a channel. The system may include an audio processing device communicatively coupled to the array of audio devices, the audio processing device installed in the aircraft. The audio processing device may be configured to receive the microphone audio data from each of the array of audio devices. The audio processing device may include a processor. The audio processing device may be configured to: monitor the channel of microphone audio data from each of at least two of the audio devices; analyze the monitored channels of microphone audio data to identify at least one of: a gender of a speaker captured by a given microphone, an estimated age of the speaker captured by the given microphone, a number of speakers captured by the given microphone, a language of the speaker captured by the given microphone, an estimated location of the speaker captured by the given microphone, at least one selective word captured by the given microphone, a loud noise having a predetermined loudness, or a threat scenario; identify an event to be an occurrence of a predetermined event based at least on the analyzing of the monitored channels of microphone audio data; based at least on the identified event and the analyzing of the monitored channels of microphone audio data, generate an event report associated with at least one channel of microphone audio data associated with the identified event; output the event report to a crew panel; and output at least a portion of microphone audio data of the at least one channel of microphone audio data associated with the identified event to the crew panel.

In a further aspect, embodiments of the inventive concepts disclosed herein are directed to a system. The system may include audio processing device including a processor. The audio processing device may be configured to: obtain or generate processed audio data, the processed audio data having been processed from monitored channels of microphone audio data from an array of audio devices, the array of audio devices installed in an aircraft cabin of an aircraft, each of the audio devices including a microphone, wherein each of the audio devices is configured to output microphone audio data on a channel; obtain or generate an event report associated with at least one channel of microphone audio data associated with an identified event, the identified event to being an occurrence of a predetermined event; obtain or generate at least a portion of the processed audio data of the at least one channel of microphone audio data associated with the identified event; analyze the processed audio data and the event report to label portions of the processed audio data as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure; store the labeled portions of the processed audio data; and output at least some of the labeled portions of the processed audio data to a crew panel or an offboard device.

In a further aspect, embodiments of the inventive concepts disclosed herein are directed to a system. The system may include a post event investigation (PEI) device including a processor. The post event investigation device may be configured to: obtain or generate processed audio data, the processed audio data having been processed from monitored channels of microphone audio data from an array of audio devices installed in an aircraft cabin of an aircraft, wherein each of the audio devices is configured to output microphone audio data on a channel; obtain or generate an event report associated with at least one channel of microphone audio data associated with an identified event, the identified event to being an occurrence of a predetermined event; obtain or generate at least a portion of the processed audio data of the at least one channel of microphone audio data associated with the identified event; obtain labeled portions of the processed audio data or analyze the processed audio data and the event report to label portions of the processed audio data as the labeled portions of the processed audio data, wherein each of the labeled portions of the processed audio data is labeled as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure; and recreate the identified event at least by replaying, for a user, at least one of the labeled portions of the processed audio data.

In a further aspect, embodiments of the inventive concepts disclosed herein are directed to a method. The method may include: obtaining or generating, by at least one post event investigation (PEI) device, processed audio data, the processed audio data having been processed from monitored channels of microphone audio data from an array of audio devices installed in an aircraft cabin of an aircraft, wherein each of the audio devices is configured to output microphone audio data on a channel, wherein each of the at least one PEI device comprises at least one processor; obtaining or generating, by the at least PEI device, an event report associated with at least one channel of microphone audio data associated with an identified event, the identified event to being an occurrence of a predetermined event; obtaining or generating, by the at least one PEI device, at least a portion of the processed audio data of the at least one channel of microphone audio data associated with the identified event; by the at least one PEI device, obtaining labeled portions of the processed audio data or analyzing the processed audio data and the event report to label portions of the processed audio data as the labeled portions of the processed audio data, wherein each of the labeled portions of the processed audio data is labeled as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure; and recreating, by the at least one PEI device, the identified event at least by replaying, for a user, at least one of the labeled portions of the processed audio data.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system according to the inventive concepts disclosed herein.
FIG. 2 is a view of an exemplary embodiment of an audio device of the system of FIG. 1 according to the inventive concepts disclosed herein.
FIG. 3 is a view of an exemplary embodiment of an aircraft interface computing device of the system of FIG. 1 according to the inventive concepts disclosed herein.
FIG. 4 is a view of an exemplary embodiment of audio processing device of the system of FIG. 1 according to the inventive concepts disclosed herein.
FIG. 5 is a view of an exemplary embodiment of another audio processing device of the system of FIG. 1 according to the inventive concepts disclosed herein.
FIG. 6 is a view of an exemplary embodiment of a post event investigation (PEI) device of the system of FIG. 1 according to the inventive concepts disclosed herein.
FIG. 7 is a view of an exemplary embodiment of the system of FIG. 1 according to the inventive concepts disclosed herein.
FIG. 8 is a view of an exemplary embodiment of the system of FIG. 1 according to the inventive concepts disclosed herein.
FIG. 9 is a view of an exemplary embodiment of the system of FIG. 1 according to the inventive concepts disclosed herein.
FIG. 10 is a view of an exemplary embodiment of the system of FIG. 1 according to the inventive concepts disclosed herein.
FIG. 11 is a diagram of an exemplary embodiment of a method according to the inventive concepts disclosed herein.
FIGS. 12A-12M is a view of an exemplary embodiment of a flow diagram including a classification model according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a system and a method configured to provide audio analytics onboard and/or offboard of an aircraft for safety and surveillance of an aircraft cabin.

Some embodiments may include audio analytics onboard an aircraft for safety and surveillance of an aircraft cabin and may provide a crew alert (e.g., on a crew panel, which may also be interchangeably referred to as a crew call panel or a crew management system). The audio data may also be analyzed onboard and/or offboard of the aircraft, such as on the ground or in the air, to further extract information from live-streamed and/or on-demand recorded audio to recognize any unusual event during flight and/or for training of crew and optimization of services provided in the cabin. For example, the audio data may be transmitted via satellite communication (SATCOM) to a ground site that provides analytics in real time, such as if there is a high threat unusual event is perceived.

Some embodiments may include an array (e.g., a network) of distributed audio devices, which may include microphones, that live stream (e.g., by a wired and/or wireless connection) audio data to a bridge device, such as an aircraft interface computing device and/or an audio processing device, which in turn can communicate a stream of data to the crew panel, to a recording device, and/or to cockpit and other communication systems. The communication systems may further transmit such data to ground equipment for further detailed analysis.

Some embodiments provide an automatic system that provides advanced situation analysis, reports, and alarms, which can increase safety and security inside the cabin. In some embodiments, the automatic system may reduce a workload of the crew. For example, an unusual sound coming from an aircraft system, such as landing gear, an engine, a fan cowl, or any other moving body of the aircraft, and from high vibrations may help identify an impending aircraft system failure. The system may help gauge the situation at a location where a camera blind spot exists.

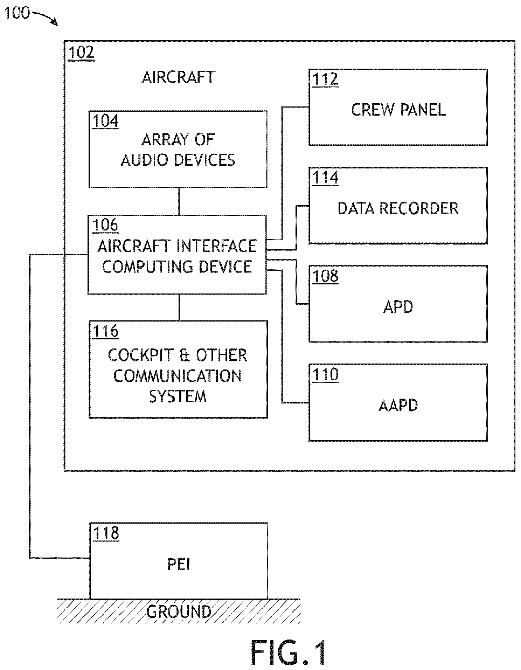

Referring now to FIGS. 1-7, an exemplary embodiment of a system 100 according to the inventive concepts disclosed herein is depicted. In some embodiments, the system 100 may include an aircraft 102, at least one other aircraft, and/or at least one post event investigation (PEI) computing device 118, some or all of which may be communicatively coupled at any given time. The aircraft 102 may include at least one user (e.g., flight crew and/or pilot(s)), at least one array of audio devices 104, at least one aircraft interface computing device 106 (e.g., an aircraft router computing device), at least one first audio processing device (APD) 108, at least one second APD 110 (e.g., an advanced APD), at least one crew panel 112, at least one data recorder 114, and/or at least one cockpit and other communication system 116, some or all of which may be communicatively coupled at any given time. In some embodiments, the at least one aircraft interface computing device 106, the at least one first audio processing device (APD) 108, the at least one second APD 110, the at least one crew panel 112, the at least one data recorder 114, and/or the at least one cockpit and other communication system 116 may be implemented as a single computing device or any number of computing devices configured to perform (e.g., collectively perform if more than one computing device) any or all of the operations disclosed throughout. For example, the at least one aircraft interface computing device 106, the at least one first audio processing device (APD) 108, the at least one second APD 110, the at least one crew panel 112, the at least one data recorder 114, and/or the at least one cockpit and other communication system 116 may be installed in the aircraft 102. In some embodiments, the at least one aircraft interface computing device 106, the at least one first audio processing device (APD) 108, the at least one second APD 110, the at least one crew panel 112, the at least one data recorder 114, the at least one cockpit and other communication system 116, and/or a user (e.g., a remote pilot or remote crewmember) may be located offboard of the aircraft 102, for example, if a given aircraft 102 is a remote piloted aircraft (e.g., an unmanned aerial vehicle (UAV) or a drone aircraft).

For example, the user may be a pilot or crew member. The user may interface with the system 100 via any suitable user interfaces, such as the crew panel 112. The at least one user interface may be implemented as any suitable user interface, such as a control panel, a touchscreen (e.g., of a display unit computing device and/or the crew panel 112), a multipurpose control panel, a control panel integrated into a flight deck, a cursor control panel (CCP) (sometimes referred to as a display control panel (DCP)), a keyboard, a mouse, a trackpad, at least one hardware button, a switch, an eye tracking system, and/or a voice recognition system. The user interface may be configured to receive at least one user input and to output the at least one user input to a computing device (e.g., 106, APD 108, and/or AAPD 110). For example, a pilot or crew member of the aircraft 102 may be able to interface with the user interface 110 to: view and/or listen to an event report and/or an alert; and/or listen to a portion of aircraft cabin audio provided by the APD 108 and/or AAPD 110.

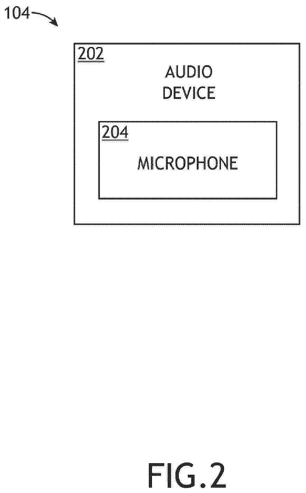

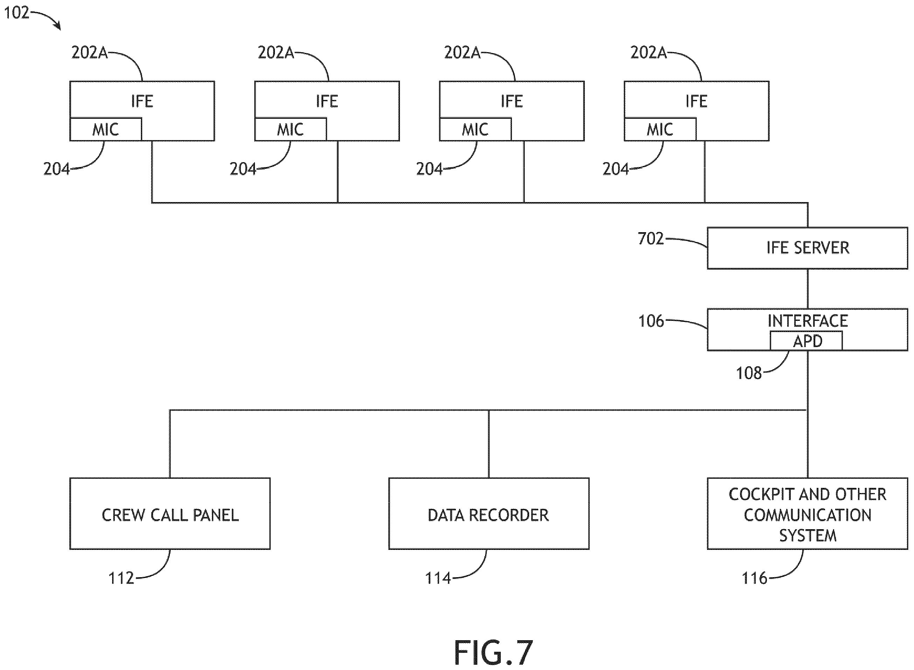

The array 104 of audio devices 202 may include a plurality of audio devices 202 installed in an aircraft cabin of the aircraft 102 and may be implemented as any suitable array of any suitable audio devices. In some embodiments, some or all of the audio devices 202 may be in-flight entertainment (IFE) devices; for example, as shown in FIG. 7, the array 104 of audio devices 202 may be communicatively coupled to an IFE server 702. The array 104 may be a network of interconnected audio devices 202. The audio devices 202 may each include at least one microphone 204, as shown in FIG. 2. Each of the audio devices 202 may be configured to output at least one channel of microphone audio data captured in an aircraft cabin to the APD 108 and/or the AAPD 110.

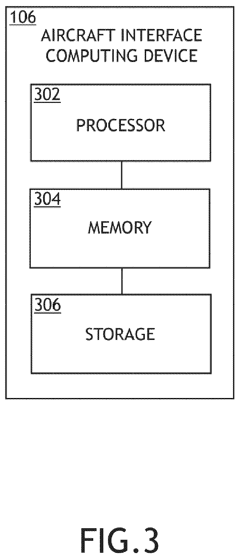

The at least one aircraft interface computing device 106 may be implemented as any suitable computing device, such as an aircraft router computing device (e.g., a flight operation and maintenance exchange (FOMAX) computing device or a smart router). The at least one aircraft interface computing device 106 may include any or all of the elements, as shown in FIG. 3. For example, the aircraft interface computing device 106 may include at least one processor 302, at least one memory 304, and/or at least one storage 306, some or all of which may be communicatively coupled at any given time. For example, the at least one processor 302 may include at least one central processing unit (CPU), at least one graphics processing unit (GPU), at least one field-programmable gate array (FPGA), at least one application specific integrated circuit (ASIC), at least one digital signal processor, at least one deep learning processor unit (DPU), at least one virtual machine (VM) running on at least one processor, and/or the like configured to perform (e.g., collectively perform) any of the operations disclosed throughout. For example, the at least one processor 302 may include a CPU and a GPU configured to perform (e.g., collectively perform) any of the operations disclosed throughout. The processor 302 may be configured to run various software applications or computer code stored (e.g., maintained) in a non-transitory computer-readable medium (e.g., memory 304 and/or storage 306) and configured to execute various instructions or operations. The processor 302 of the aircraft computing device 106 may be configured to perform any or all of the operations disclosed throughout.

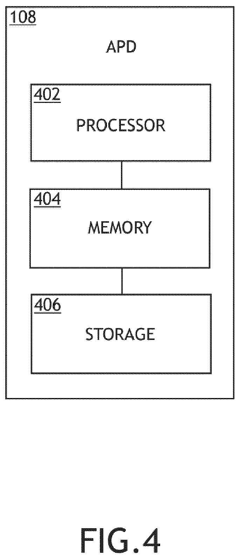

The at least one APD 108 may be implemented as any suitable audio processing computing device. The APD 108 may be installed in the aircraft 102. The APD 108 may be a line replaceable unit (LRU). As shown in FIG. 4, the APD 108 may include at least one processor 402, at least one memory 404, and/or at least one storage 406, some or all of which may be communicatively coupled at any given time. For example, the at least one processor 402 may include at least one central processing unit (CPU), at least one graphics processing unit (GPU), at least one field-programmable gate array (FPGA), at least one application specific integrated circuit (ASIC), at least one digital signal processor (DSP), at least one deep learning processor unit (DPU), at least one virtual machine (VM) running on at least one processor, and/or the like configured to perform (e.g., collectively perform) any of the operations disclosed throughout. For example, the at least one processor 402 may include at least one CPU, at least one DSP, and at least one GPU configured to perform (e.g., collectively perform) any of the operations disclosed throughout. In some embodiments, at least some of the at least one processor 402 forms at least one neural network. In some embodiments, at least some of the at least one processor 402 may use artificial intelligence (Al), machine learning (ML), and/or a neural network to carry out any or all of the operations disclosed throughout, as would be understood by one of ordinary skill in the art of using Al, ML, and neural networks. The processor 402 may be configured to run various software applications or computer code stored (e.g., maintained) in a non-transitory computer-readable medium (e.g., memory 404 and/or storage 406) and configured to execute various instructions or operations. The processor 402 may be configured to perform any or all of the operations disclosed throughout. For example, the at least one APD 108 may be configured to (e.g., collectively configured if more than one APD): receive the microphone audio data from each of the array 104 of audio devices 202; monitor the channel of microphone audio data from each of at least two of the audio devices 202; analyze the monitored channels of microphone audio data to identify at least one of: a gender of a speaker captured by a given microphone 204, an estimated age of the speaker captured by the given microphone, a number of speakers captured by the given microphone, a language of the speaker captured by the given microphone 204, at least one selective word (e.g., a predetermined word, a predetermined phrase, or a predetermined sentence, in any of a predetermined set of languages) captured by the given microphone 204, an estimated location of the speaker captured by the given microphone, a loud noise having a predetermined loudness, or a threat scenario; identify an event to be an occurrence of a predetermined event based at least on the analyzing of the monitored channels of microphone audio data; based at least on the identified event and the analyzing of the monitored channels of microphone audio data, generate an event report (e.g., including information of an event type, a location of the event in the aircraft cabin, and a severity level of the event) associated with at least one channel of microphone audio data associated with the identified event; output the event report to a crew panel 112; and/or output at least a portion of microphone audio data of the at least one channel of microphone audio data associated with the identified event to the crew panel 112.

In some embodiments, the at least one APD 108 may be further configured to: based at least on the monitoring of the channel of microphone audio data from at least two of the audio devices 202, assign a severity level of a plurality of severity levels to a portion of the channel of the microphone audio data from at least two of the audio devices, wherein the plurality of severity levels are predetermined severity levels and include a highest severity level and at least one other severity level, each of the at least one other severity level having a relative severity that is less than the highest severity level. In some embodiments, the at least one APD 108 may be further configured to: store the portion of the channel of microphone audio data from at least two of the audio devices 202 for a particular duration based on the assigned severity level, wherein a particular portion having an assigned highest severity level is stored longer than another particular portion having another assigned severity level.

In some embodiments, the at least one APD 108 may be further configured to: output a command, to at least one of the array 104 of audio devices 202, to enable or disable at least one audio stream of at least one microphone 204 of the at least one of the array 104 of audio devices 202.

In some embodiments, the at least one APD 108 may be further configured to: based at least on the identified event and the analyzing of the monitored channels of microphone audio data, generate a threat alarm associated with the identified event; and output the threat alarm to the crew panel 112.

In some embodiments, the at least one APD 108 may be further configured to: enhance an audio quality of the monitored channels of microphone audio data, for example, by performing noise cancellation operations on the monitored channels of microphone audio data to remove background noise.

In some embodiments, the at least one APD 108 may be further configured to: output processed audio data to the at least one second APD 110 (e.g., an AAPD), the processed audio data having been processed from the monitored channels of microphone audio data; and output the event report to the at least one second APD 110.

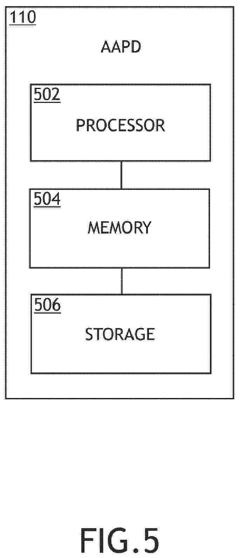

The at least one second APD 110 (e.g., an AAPD) may be implemented as any suitable audio processing computing device. The AAPD 110 may be installed in the aircraft 102 or offboard of the aircraft. In some embodiments, the AAPD 110 may be a line replaceable unit (LRU). As shown in FIG. 5, the AAPD 110 may include at least one processor 502, at least one memory 504, and/or at least one storage 506, some or all of which may be communicatively coupled at any given time. For example, the at least one processor 502 may include at least one central processing unit (CPU), at least one graphics processing unit (GPU), at least one field-programmable gate array (FPGA), at least one application specific integrated circuit (ASIC), at least one digital signal processor (DSP), at least one deep learning processor unit (DPU), at least one virtual machine (VM) running on at least one processor, and/or the like configured to perform (e.g., collectively perform) any of the operations disclosed throughout. For example, the at least one processor 502 may include at least one CPU, at least one DSP, and at least one GPU configured to perform (e.g., collectively perform) any of the operations disclosed throughout. In some embodiments, at least some of the at least one processor 502 forms at least one neural network. In some embodiments, at least some of the at least one processor 502 may use artificial intelligence (Al), machine learning (ML), and/or a neural network to carry out any or all of the operations disclosed throughout, as would be understood by one of ordinary skill in the art of using Al, ML, and neural networks. The processor 502 may be configured to run various software applications or computer code stored (e.g., maintained) in a non-transitory computer-readable medium (e.g., memory 504 and/or storage 506) and configured to execute various instructions or operations. The processor 502 may be configured to perform any or all of the operations disclosed throughout. For example, the at least one AAPD 110 may be configured to (e.g., collectively configured if more than one AAPD 110): obtain or generate processed audio data, the processed audio data having been processed from monitored channels of microphone audio data from an array 104 of audio devices 202, the array 104 of audio devices 202 installed in an aircraft cabin of an aircraft 102, each of the audio devices 202 including a microphone 204, wherein each of the audio devices 202 is configured to output microphone audio data on a channel; obtain or generate an event report associated with at least one channel of microphone audio data associated with an identified event, the identified event to being an occurrence of a predetermined event; obtain or generate at least a portion of the processed audio data of the at least one channel of microphone audio data associated with the identified event; analyze the processed audio data and the event report to label portions of the processed audio data as at least one of: a threat scenario, an unusual sound captured by a given microphone 204, at least one selective word captured by the given microphone 204, a temperament of a speaker captured by the given microphone 204, a speaker profile, a language of the speaker captured by the given microphone 204, a location of the speaker captured by the given microphone 204, or an aircraft system failure; store the labeled portions of the processed audio data; and/or output at least some of the labeled portions of the processed audio data to a crew panel 112 or an offboard device (e.g., PEI 118).

In some embodiments, the at least one AAPD 110 may be further configured to: output the at least some of the labeled portions of the processed audio data to the crew panel 112 based on a severity level of a plurality of severity levels, wherein the plurality of severity levels are predetermined severity levels and include a highest severity level and at least one other severity level, each of the at least one other severity level having a relative severity that is less than the highest severity level.

In some embodiments, the at least one AAPD 110 may be further configured to: update the event report based at least on the labeled portions of the processed audio data; and output the updated event report to the crew panel 112 or the offboard device (e.g., PEI 118).

In some embodiments, the at least one AAPD 110 may be further configured to: based at least on the labeled portions of the processed audio data, generate a threat alarm associated with at least one of the labeled portions; and output the threat alarm to the crew panel 112.

In some embodiments, the at least one AAPD 110 may be further configured to: enhance an audio quality of the labeled portions of the processed audio data, for example, by performing noise cancellation operations on the labeled portions of the processed audio data to remove background noise.

In some embodiments, the at least one AAPD 110 may be further configured to: generate a textual transcript corresponding to at least one of the labeled portions of the processed audio data, and output the textual transcript to the crew panel 112 or the offboard device (e.g., PEI 118).

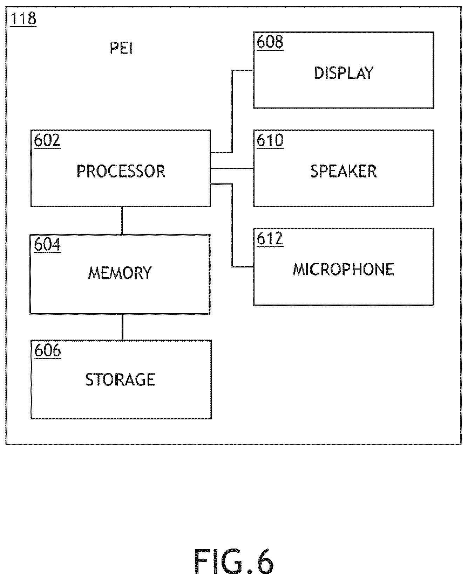

The at least one PEI device 118 may be implemented as any suitable audio processing computing device. The PEI device 118 may be installed in the aircraft 102 or offboard of the aircraft 102 (e.g., in a cloud computing environment). In some embodiments, the PEI device 118 may be a line replaceable unit (LRU). As shown in FIG. 6, the PEI device 118 may include at least one processor 602, at least one memory 604, at least one storage 606, at least one display 608, at least one speaker 610, at least one microphone 612, and/or at least one user interface device (e.g., a keyboard and/or a mouse), some or all of which may be communicatively coupled at any given time. For example, the at least one processor 602 may include at least one central processing unit (CPU), at least one graphics processing unit (GPU), at least one field-programmable gate array (FPGA), at least one application specific integrated circuit (ASIC), at least one digital signal processor (DSP), at least one deep learning processor unit (DPU), at least one virtual machine (VM) running on at least one processor, and/or the like configured to perform (e.g., collectively perform) any of the operations disclosed throughout. For example, the at least one processor 602 may include at least one CPU, at least one DSP, and at least one GPU configured to perform (e.g., collectively perform) any of the operations disclosed throughout. In some embodiments, at least some of the at least one processor 602 forms at least one neural network. In some embodiments, at least some of the at least one processor 602 may use artificial intelligence (Al), machine learning (ML), and/or a neural network to carry out any or all of the operations disclosed throughout, as would be understood by one of ordinary skill in the art of using Al, ML, and neural networks. The processor 602 may be configured to run various software applications or computer code stored (e.g., maintained) in a non-transitory computer-readable medium (e.g., memory 604 and/or storage 606) and configured to execute various instructions or operations. The processor 602 may be configured to perform any or all of the operations disclosed throughout. For example, the at least one PEI device 118 may be configured to (e.g., collectively configured if more than one PEI device 118): obtain or generate processed audio data, the processed audio data having been processed from monitored channels of microphone audio data from an array 104 of audio devices 202 installed in an aircraft cabin of an aircraft 102, wherein each of the audio devices 202 is configured to output microphone audio data on a channel; obtain or generate an event report associated with at least one channel of microphone audio data associated with an identified event, the identified event to being an occurrence of a predetermined event; obtain or generate at least a portion of the processed audio data of the at least one channel of microphone audio data associated with the identified event; obtain labeled portions of the processed audio data or analyze the processed audio data and the event report to label portions of the processed audio data as the labeled portions of the processed audio data, wherein each of the labeled portions of the processed audio data is labeled as at least one of: a threat scenario, an unusual sound captured by a given microphone 204, at least one selective word captured by the given microphone 204, a temperament of a speaker captured by the given microphone 204, a speaker profile, a language of the speaker captured by the given microphone 204, a location of the speaker captured by the given microphone 204, or an aircraft system failure; and/or recreate the identified event at least by replaying (e.g., via the display 608 and/or the at least one speaker 610), for a user, at least one of the labeled portions of the processed audio data.

In some embodiments, the at least one PEI device 118 may be further configured to: recreate the identified event at least by replaying (e.g., via the display 608 and/or the at least one speaker 610), for the user, the at least one of the labeled portions of the processed audio data with a displayed textual transcript corresponding to the at least one of the labeled portions of the processed audio data.

In some embodiments, the at least one PEI device 118 may be further configured to: recreate the identified event at least by replaying (e.g., via the display 608 and/or the at least one speaker 610), for the user, the at least one of the labeled portions of the processed audio data with at least one displayed video segment corresponding to captured video of a particular location of the identified event on the aircraft 102 associated with the at least one of the labeled portions of the processed audio data.

In some embodiments, the at least one PEI device 118 may be further configured to: access a virtual rendering of the aircraft 102; and virtually recreate the identified event at least by replaying (e.g., via the display 608 and/or the at least one speaker 610), for the user, the at least one of the labeled portions of the processed audio data with the virtual rendering of the aircraft 102 showing a location of the identified event. In some embodiments, the virtual rendering of the aircraft 102 includes a virtual rendering of the aircraft cabin layout including seating zones and seating arrangements.

In some embodiments, one or more of the at least one of the labeled portions of the processed audio data include a voice of a selected crew member, wherein the at least one PEI device 118 may be further configured to: virtually recreate the identified event at least by replaying (e.g., via the display 608 and/or the at least one speaker 610), for the user, the at least one of the labeled portions of the processed audio data with a visual depiction of at least one status characteristic of the selected crew member's voice, the at least one status characteristic including at least one of: a loudness, a temperament, an accent, or an indication of yelling. In some embodiments, the at least one PEI device 118 may be further configured to: generate a report card of behavior of the selected crew member during the identified event based at least on the at least one status characteristic of the selected crew member's voice. In some embodiments, the at least one PEI device 118 may be further configured to: generate a report card of behavior of the selected crew member during the identified event based at least on the at least one status characteristic of the selected crew member's voice and a phase of flight during the identified event; and store the report card.

In some embodiments, the at least one PEI device 118 may be further configured to: use the recreated identified event as a training exercise at least by replaying (e.g., via the display 608 and/or the at least one speaker 610), to a crew member in training, at least one of the labeled portions of the processed audio data.

In some embodiments, the APD 108 and the AAPD 110 may be implemented as a single audio processing device having the functionality of the APD 108, the AAPD 110, and/or the PEI device 118.

Referring now to FIG. 7, an exemplary embodiment of a portion of the system 100 of FIG. 1 according to the inventive concepts disclosed herein is depicted. As shown in FIG. 7, the array 104 of audio devices 202 is exemplarily shown as an array 104 of IFE devices 202A, which may be communicatively coupled with the IFE server 702, the aircraft interface computing device 106, and/or the APD 108. The APD 108, AAPD 110, and/or the PEI 118 may be configured to perform analytics on audio received from the IFE devices 202A. For example, microphones 204 of the IFE devices 202A may be arranged in a peer-to-peer distributed topology or a zigzag topology that may aim to use resources efficiently to perform safety and security assessments of the aircraft cabin and provide likelihood of any events and proactive alerts for mitigation of threats. The microphones 204 in the IFE devices 202A may output channels of audio data from the aircraft cabin to the APD 108 (e.g., via the IFE server 702 and/or the aircraft interface computing device 106). The audio data may be stored for any of various suitable predetermined durations based on a severity level associated with an identified event. For example, if a severity level is a 1 level, data may be stored for 5 seconds and for severity levels 2 and 3 voice data may be stored for 10 and 15 seconds, respectively. The microphones 204 may be installed in each IFE device 202A to capture the audio data. In some embodiments, the audio devices 202 may be any suitable device configured to capture aircraft cabin audio data.

In some embodiments, the audio data may be processed, and analytics may be performed on multiple human verbal and other factors, such as selective word (e.g., critical word) detections, pitch and frequency analysis, volume, abusive tone, screaming, screeching, shouting, panic, and exceptional acoustic events like crack, bang, thud, gun shots and sounds from product or mechanism failures, pressurization change indicator events, outside engine audio qualities, doors opening or closing, etc.

In some embodiments, the recorded audio data may also be transmitted to the PEI device 118 (e.g., at a ground station) over a wireless link or through physical medium transfer for further processing of the audio data to detect any anomaly and/or signature of anomaly coming from various systems on board the aircraft 102. Additionally, the recorded audio data may be used for service optimization and training of the crew members.

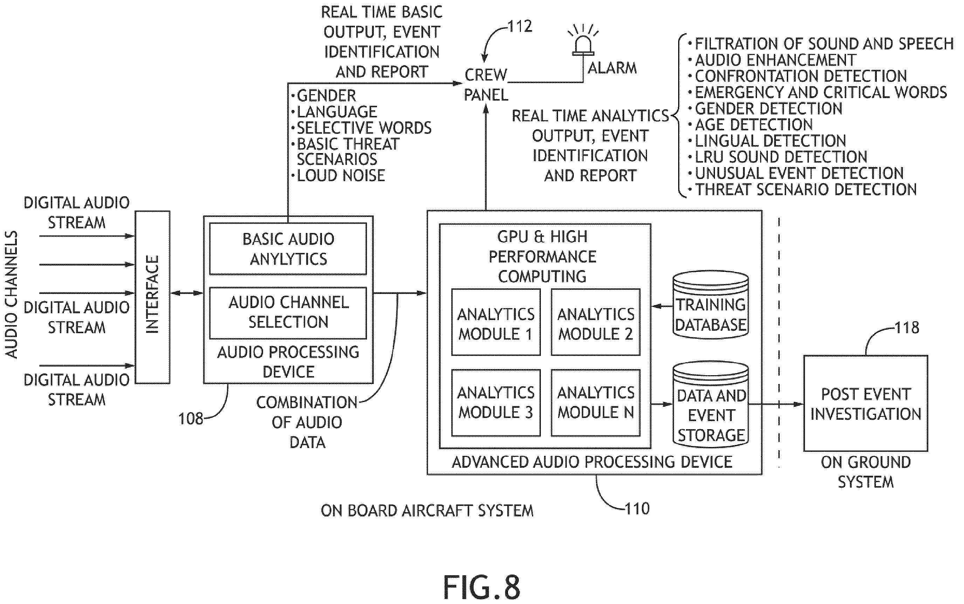

Referring now to FIG. 8, a functional block diagram of an exemplary embodiment of a portion of the system 100 of FIG. 1 according to the inventive concepts disclosed herein is depicted. FIG. 8 depicts an audio-based distributed analytics system which may be contained on board the aircraft 102 and can be co-located on the ground.

Some embodiments may include an APD 108 configured to receive the audio data channels and to provide commands to audio interface for audio channel selection (e.g., for some or all of microphones 204 to be enabled or disabled) as required for processing. The APD 108 may be an edge computing device for processing of the audio data for multiple type of enhancements and analytics like gender, language, selective words, threat scenarios, and unusual events like loud sound.

In some embodiments, the aircraft 102 also includes an AAPD 110. The APD 108 may provide processed audio data to the AAPD 110. In some embodiments, the AAPD 110 may include multiple analytics modules and advanced audio processing modules. The audio processing modules can process the data for spectrogram improvements like voice selection, speech selection, noise reduction, etc. The analytics modules of the AAPD 110 may include pre-trained modules (e.g., artificial intelligence (Al) modules, machine learning (ML) modules, and/or neural network modules) for performing operations like selective word (e.g., critical word) detections, pitch and frequency analysis, volume, abusive tone, screaming, screeching, shouting and exceptional acoustic events detection, LRU sound detection etc. In some embodiments, the APD 108 may also include such pre-trained modules.

The onboard cockpit and communication system 116 (which may include an alarm system) and the crew panel 112 may take inputs from analytics module(s) and provides detailed safety and security assessment of the aircraft cabin to crew and pilot. In case any safety and/or security threat exists, such device(s) may annunciate an alarm for better cognizance by pilot and crew.

The processed audio data and/or labels (e.g., markers) may be stored in on board data storage and/or a database. Also, the raw data may be stored on the on-board data storage and/or the database. In some embodiments, once the aircraft 102 touches ground the on-board data storage and/or database information may be transmitted and/or physically transferred to the PEI device 118 for further processing.

The PEI device 118 may process the audio data further for enhanced detection on events (e.g., incidents), items of interest for improving operational efficiency, training etc. In some embodiments, for this, the PEI device 118 may include at least one high performance computing (HPC) processor and at least one GPU, at least one module with pre-trained neural networks for analytics, at least one report module for generating detailed safety and security analysis reports, and at least one database for comprehensive storage of all the required information. In some embodiments, a PEI application can be hosted in a cloud computing environment.

In some embodiments, the APD 108, the AAPD 110, and/or the PEI device 118 may include a service request module, which may analyze the voice of passengers for their specific needs and requests like comfort, cabin temperature regulation needs (e.g., higher or lower temperature), light on or off, illness or not well condition, and/or noticing of any hazardous or unusual condition. This module can be further enhanced based on airliner specific requirements and audio analytics needs.

The system 100 may include a distributed network of receivers (e.g., the array 104 of audio devices 202) that may act independently or be closely calibrated to video devices installed in the aircraft cabin. These audio receivers may have unique identification and may be analyzed to know from where the audio cues are coming. The location of the audio device may be used in the analysis process and to guide the crew to the location of the event in real time.

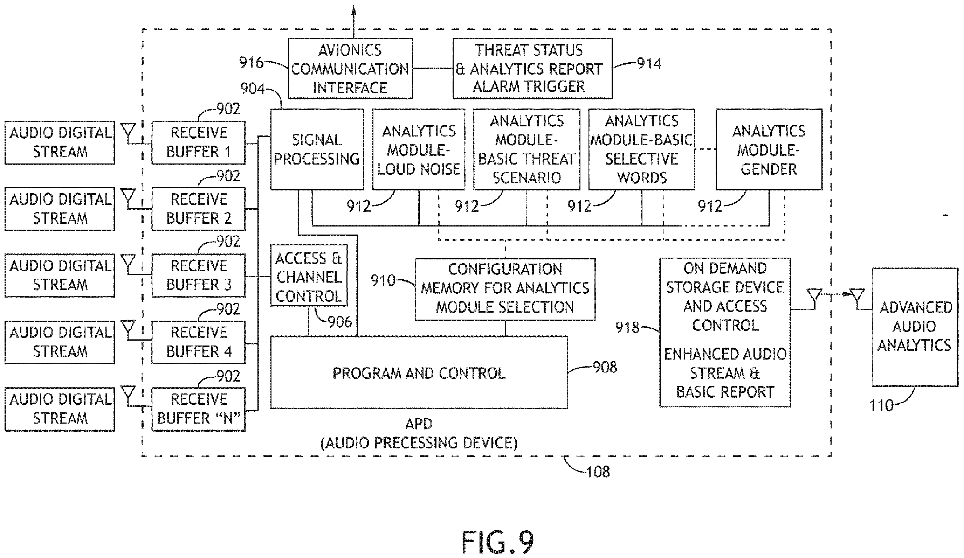

Referring now to FIG. 9, a functional block diagram of an exemplary embodiment of a portion of the system 100 of FIG. 1 according to the inventive concepts disclosed herein is depicted. FIG. 9 shows a functional block diagram of an exemplary APD 108 of the system 100 of FIG. 1.

In some embodiments, the APD 108 may include receive buffers 902, at least one signal processing module 904, at least one access and channel control module 906, at least one program and control module 908, at least one configuration memory module 910 for analytics module selection, at least one analytics module 912, at least one module 914, at least one avionics communication interface 916, and/or at least one on demand storage device and access control 918, some or all of which may be communicatively coupled at any given time. In some embodiments, the receive buffers 902, the at least one signal processing module 904, the at least one access and channel control module 906, the at least one program and control module 908, the at least one configuration memory module 910 for analytics module selection, the at least one analytics module 912, the at least one module 914, the at least one avionics communication interface 916, and/or the at least one on demand storage device and access control 918 may be implemented as a single device or any number of devices.

In some embodiments, each of the receive buffers 902 and/or the at least one on demand storage device and access control 918 may at least in part include the memory 404 and/or the storage 406 of FIG. 4.

In some embodiments, each of the at least one signal processing module 904, the at least one access and channel control module 906, the at least one program and control module 908, the at least one configuration memory module 910 for analytics module selection, the at least one analytics module 912, the at least one module 914 (e.g., a threat status and analytics report alarm module), the at least one avionics communication interface 916, and/or the at least one on demand storage device and access control 918 may at least in part include the at least one processor 402 of FIG. 4.

In some embodiments, the APD 108 may be an LRU that acts as a first point of interface for the streams of digital audio data coming from the audio sensors (e.g., microphones 204) in the aircraft 102. The APD 108 may be an edge computing device with capabilities to perform audio processing and analytics to provide the aircraft safe condition and threat assessment to the crew and pilot. The APD 108 may also include a communication module called access & channel control that coordinates the communication from audio source channels, channel selection of the audio stream based on feedback from the analytics modules 912 to select and/or deselect the audio source and provides the real time basic output, triggers and/or events and reports to the crew panel 112 and avionics in the cockpit.

In some embodiments, the APD 108 may also coordinate with the crew panel 112 for alarm trigger on the crew panel 112 to bring the cognizance of threat situation and severity to the crew. For this, the APD 108 may communicate the threat status, analytics report, and alarm trigger to the crew panel 112 and avionics system using the avionics communication interface 916.

The APD 108 may include a program and control module 108 that controls the sub-systems and their functionalities like communication interfaces, signal processing module 904, and analytics modules 912. The different analytics modules 912 may be configurable and controlled through a configuration memory module 910 and may be configurable based on customer's choice.

The signal processing module 904 may generate different types of spectrograms and help with dedicated computing resources to perform feature extraction, generate spectral features and associated properties for providing the inputs to different analytics modules 912. The signal processing module 904 may include at least one digital signal processor and at least one GPU for processing. The signal processing module 904 may also help in speech enhancements, noise reduction, and/or specific sound selection.

The APD 108 may include software configurable and selectable analytics modules 912, which may be pre-trained analytics modules for variety of services based on customer preference. The APD 108 may include classification pretrained analytics modules 912 for gender classification, unusual event/trigger detection like loud noise, bang sound, etc., languages, selective word detection and threat scenario detection.

The APD 108 may include a communication bridge and access control through which the APD 108 allows access to the AAPD 110 and passes on the processed audio data stream received from signal processing module 904 and the reports including triggers / events generated by analytics modules 912.

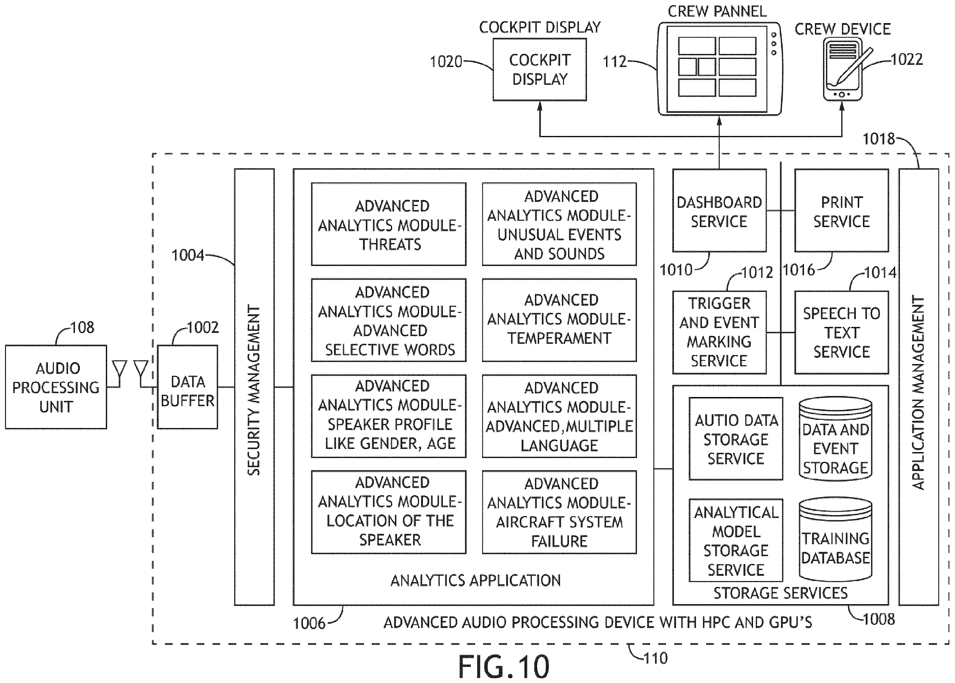

Referring now to FIG. 10, a functional block diagram of an exemplary embodiment of a portion of the system 100 of FIG. 1 according to the inventive concepts disclosed herein is depicted. FIG. 10 shows a functional block diagram of an exemplary AAPD 108 of the system 100 of FIG. 1.

In some embodiments, the AAPD 110 may be an LRU that may be equipped with a cluster of processors 502 (e.g., CPU(s) and GPU(s) to achieve a high performance computing environment. The AAPD 110 may takes processed audio stream data and aircraft cabin operating environment status reports from the APD 108 and perform advanced analytics to provide output (e.g., aircraft cabin threat scenario, voice, selectable audio channel, speaker, gender, age, tone, temperament, language, selected threat words, unusual events sounds like thud, bang, crack, scream, screech, splash, etc).

In some embodiments, the AAPD 110 may include at least one data buffer 1002, at least one security management module 1004, at least one analytics application module 1006, at least one storage services module 1008, at least one dashboard service module 1010, at least one trigger and event marking service module 1012, at least one speech to text service module 1014, at least one print service module 1016, and/or at least one application management module 1018, some or all of which may be communicatively coupled at any given time. In some embodiments, the AAPD 110 may be communicatively coupled to the crew panel 112, a cockpit display, and/or a crew device 1022 (e.g., a mobile and/or handheld computing device).

In some embodiments, each of the at least one data buffer 1002 and/or the at least one storage services module 1008 may at least in part include the memory 504 and/or the storage 506 of FIG. 5.

In some embodiments, each of the at least one security management module 1004, the at least one analytics application module 1006, the at least one storage services module 1008, the at least one dashboard service module 1010, the at least one trigger and event marking service module 1012, the at least one speech to text service module 1014, the at least one print service module 1016, and/or the at least one application management module 1018 may at least in part include the at least one processor 502 of FIG. 5.

The AAPD 110 may include a data buffer 1002 to capture the audio data stream coming from the APD 108 and provide the audio data to the analytics modules of the analytics application module 1006. The data buffer 1002 may be enable with wired and/or wireless connection(s) to the APD 108. The connection establishment and security may be handled by the security management module 1004.

The analytics application module 1006 may include the pre-trained analytics modules responsible for detection and classification of various sensitive information related to safe operating environment of the cabin and to detect unusual events and triggers. These analytics modules may be capable of sharing data with each other for leveraging the data available from other modules for analytics. Examples of various suitable analytics modules of the AAPD 110 are mentioned below:
* Threat identification: the module may synthesize the data coming from other analytics modules mentioned below and generate a confidence report for the threat, security and safety concern originating from situation like hijack, fight, system failure etc.;
* Unusual sound and events: the module may identify any unusual sound generating in the cabin like thud, bang, crack, scream, screech, splash etc. and its location of origination;
* Selective words: the module may identify threat words; abusive words spoken in the cabin and service words like help, thirsty, tired, blanket, pillow, etc.;
* Temperament: the module may identify the mood and temperament of the speaker like threatened, aggressive, enraged, etc., which could pose as a threat scenario indication;
* Speaker Profile: the module may help with key characteristics of a speaker and build a profile including information such as gender, age, and ethnicity, etc.;
* Language Identification: the module may identify the language spoken by the speaker; the specific selection of the speaker can be done from cabin crew module for the speakers who appear at higher risk of threat;
* Location of the speaker: the module may identify and provide information about the speaker's location in the aircraft, such as zone of the Aircraft, aisle, window, row number, and seat number; and/or
* Aircraft System Failure: the module may identify if an unusual sound is coming from an aircraft system, such as landing gear, engine, fan cowl, auxiliary power unit, or any other part or system of the aircraft and vibrations.

Such exemplary analytics modules along with "trigger and event marking services" module 1012 may have capabilities to label the audio data for the identified events and triggers so that the audio can be stored along with these labels for later retrievable based on instance of interest of voice in the time sequence. Once the analytics module processes the audio the analytics module may provide the labeled data to be stored with labels to the storage service - "Data and Event Storage" of the storage services module 1008.

The AAPD 110 may include the "storage service" module 1008 which may support with storage and retrieval of data required for the functioning of the analytics modules in the "training database". Along with this the storage services module 1008 may store the audio data along with associated labels and events identification for later access and retrieval for post event analysis which can be conducted either on board the aircraft or on the ground station using "Data and Event Storage".

The "Data and Event Storage" storage service of the storage services 1008 may provide capabilities for the complete and partial backup and download the data to a ground station through various means like wireless, wired or transfer through any physical medium for "post event investigation" by the PEI device 118.

The analytics application module 1006 and/or the "dashboard service" module 1010 may provide the cabin environment a condition assessment output in presentable format to the cabin crew, the crew panel 112, crew device 1022, and to the cockpit display 1020. The dashboard service module 1010 may generate the metadata and data packet for such presentation.

The AAPD 110 may have capabilities to print the cabin operating environment status report at different instances of time for offline analysis using the "printer service" module 1016. The AAPD 110 may also be configured for speech to text conversion using the "speech to text service" module 1014 for display and print based on inputs from the crew on the crew panel 112.

The AAPD 110 may include an analytics module to identify the threats emerging from different zones in the cabin and associate the threats to identify any pattern emerging from these different locations to co-relate and estimate potential collaborated threat situation.

The AAPD 110 may also be configured to differentiate crew member voice versus passenger voice and to identify any inappropriate behavior of crew member to be reported to airline operations and other concerned authorities, for example, if airlines may maintain the voice samples of all the crew members.

Referring again to FIG. 6, in some embodiments, the PEI device 118 may be an on-ground device that is used for post event investigation of the incidents from aircraft 102. The PEI device 118 may resides in a ground environment and may be accessible based on authentication. The data transfer between PEI device 118 and the AAPD 110 can happen through various means, such as a wireless connection, a wired connection or using physical medium transfer. The PEI device 118 may support with very detailed investigation which might not be possible using the AAPD 110 computing capabilities on board the aircraft 102 or not required to be performed on the aircraft 102. The PEI device 118 may support complete rendering of the aircraft layout, zones and seating arrangements and recreating the event scenario for post investigation. The PEI device 118 may also supports merging of audio data with video data for a recreation of the event scenario.

The PEI device 118 may be configured to replay the audio by selecting a track and event labels from the audio data retrieved from a database. For this, the PEI device 118 may provide visual representation of the labelled audio track over time series and events for replay.

The PEI device 118 may be configured to provide status and feedback by selecting the voice of crew members from audio stream and showing status like loud voice, bad temperament, neutral accent, and yelling, which may be helpful for training purposes. The PEI device 118 may generate a report card of the crew member for their behavior in the aircraft 102 based on their voice profile in the aircraft 102. The PEI device 118 may also monitor the response and auditability of the crew announcement in different locations of the aircraft 102 for different phases of flight, seat belt related, ascent, descent, emergency, and other general announcements.

The PEI device 118 may have access to an external audio database accessible for specific needs like training the modules, identification of any specific event which are not captured by current training modules in the internal database.

In some embodiments, the PEI device 118 may provide seamless wireless connectivity with the AAPD 110 and/or the APD 108.

In some embodiments, on-ground infrastructure may support real time incremental training and validation of the analytics modules of the APD 108, the AAPD 110, and/or the PEI device 118 with new events and inputs. The on-ground infrastructure may also support the deployment of such newly trained modules periodically.

In some embodiments, the PEI device 118 may provide capabilities for training and increasing the operational efficiency of the crew.

In some embodiments, the APD 108 and/or the AAPD 110 may be enabled with self-learning using edge computing capabilities to improve their accuracy of analytics and over-the-air upgrade and employment of modules.

In some embodiments, the APD 108 and/or the AAPD 110 may use a selection of specific analytical model based on a flight phase, such as filters can be changed during higher disturbances from engine sound. In some embodiments, the APD 108 and/or the AAPD 110 may use multilevel data processing and filtering and analytics based on empirical cabin profiling during development phase.

In some embodiments, an automatic system may provide advanced situation analysis and report along with an alarm (e.g., an aural alarm, such as a beep or a voice alarm) to increase the safety and security of the aircraft 102. In some embodiments, the automatic system may reduce crew workload. In some embodiments, an unusual sound coming from an aircraft system, such as landing gear, engine, fan cowl, or any other moving body of the aircraft and high vibrations helps identify any impending aircraft system failure.

In some embodiments, the system may help gauge, using audio, the situation at a location where blind spot exists for cameras and hence increases the coverage space on the aircraft.

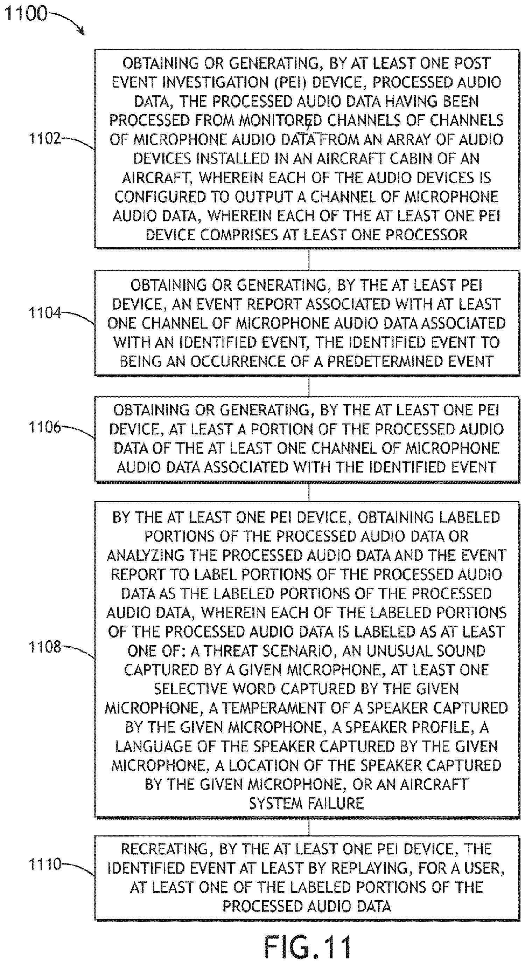

Referring now to FIG. 11, an exemplary embodiment of a method 1100 according to the inventive concepts disclosed herein may include one or more of the following steps. Additionally, for example, some embodiments may include performing one or more instances of the method 1100 iteratively, concurrently, and/or sequentially. Additionally, for example, at least some of the steps of the method 1100 may be performed in parallel and/or concurrently. Additionally, in some embodiments, at least some of the steps of the method 1100 may be performed non-sequentially.

A step 1102 may include obtaining or generating, by at least one post event investigation (PEI) device, processed audio data, the processed audio data having been processed from monitored channels of microphone audio data from an array of audio devices installed in an aircraft cabin of an aircraft, wherein each of the audio devices is configured to output microphone audio data on a channel, wherein each of the at least one PEI device comprises at least one processor.

A step 1104 may include obtaining or generating, by the at least PEI device, an event report associated with at least one channel of microphone audio data associated with an identified event, the identified event to being an occurrence of a predetermined event.

A step 1106 may include obtaining or generating, by the at least one PEI device, at least a portion of the processed audio data of the at least one channel of microphone audio data associated with the identified event.

A step 1108 may include by the at least one PEI device, obtaining labeled portions of the processed audio data or analyzing the processed audio data and the event report to label portions of the processed audio data as the labeled portions of the processed audio data, wherein each of the labeled portions of the processed audio data is labeled as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure.

A step 1110 may include recreating, by the at least one PEI device, the identified event at least by replaying, for a user, at least one of the labeled portions of the processed audio data.

Further, the method 1100 may include any of the operations disclosed throughout.

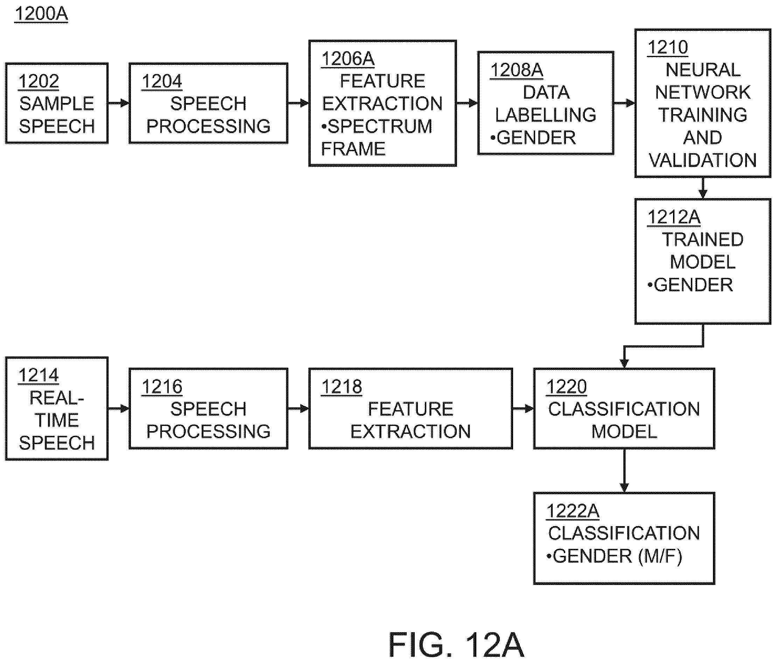

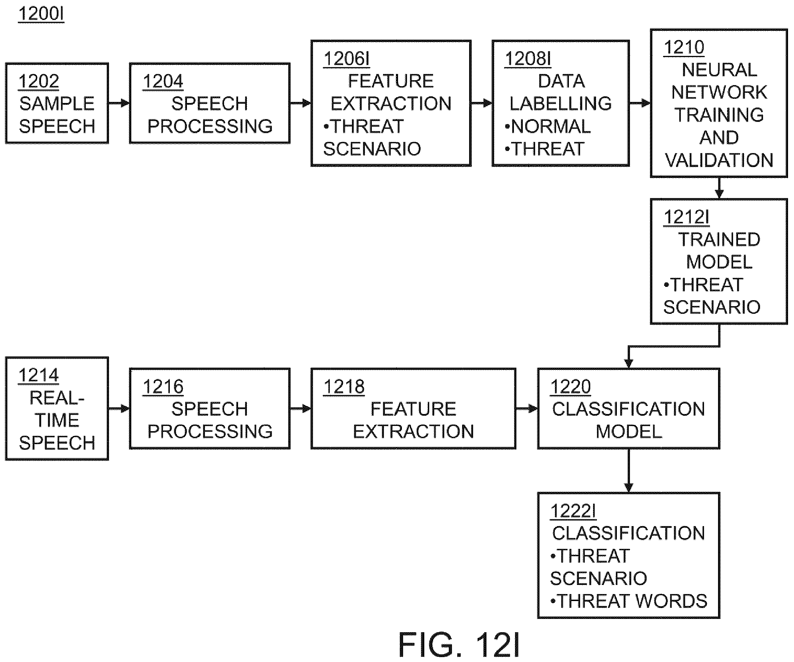

Referring generally to FIGS. 12A-12H, one or more flow diagrams of a method 1200 are described, in accordance with one or more embodiments of the present disclosure. The method 1200 may be implemented in software. The method 1200 may include training one or more classification models 1212. The classification models 1212 may then be configured to analyze the monitored channels of microphone audio data to identify at least one of: a gender of a speaker captured by a given microphone, an estimated age of the speaker captured by the given microphone, a number of speakers captured by the given microphone, a language of the speaker captured by the given microphone, an estimated location of the speaker captured by the given microphone, at least one selective word captured by the given microphone, a loud noise having a predetermined loudness, or a threat scenario. By way of another example, the classification models 1212 may be configured to analyze the processed audio data and the event report to label portions of the processed audio data as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure.

The training of the classification models may be a multi-step process where sample speeches or sounds 1202 are collected. The sample speech or sound 1202 may be captured to sample speech or sound within the aircraft. Optionally, once preprocessing happens words are extracted using tokenization 1203. The sample speeches or sounds 1202 are pre-processed 1204 for digital conversion, noise elimination, filtering and transformation to make the speeches or sounds suitable for feature extraction 1206. The feature extraction 1206 may include extracting one or more features based on the desired classification model. For example, the feature extraction 1206 may include extracting the following features: spectrum frame, age, speaker count, spectrogram, spectral centroids, zero crossing rate, Mel-frequency rate, threat scenarios, unusual sounds, temperament, anomalies, and the like. The features may then be labelled in a data labelling 1208 step. The labelled data may then be provided for neural network training and validation 1210. The network training may include training a neural network. The neural network used may be an artificial neural network with multiple layers. The neural network training and validation 1210 may then be considered to form one or more trained classification model 1212.

The trained classification model 1212 may be trained to classify various real-time speech or sound 1214. For example, the real-time speech or sound 1214 may be received and the processed 1216. Feature extraction 218 may then be performed on the processed sound or speech to extract one or more features. The feature extraction 218 may be similar to the feature extraction 1206. The extracted features may then be provided to the trained classification model 1212 in a step 1220. The trained classification model 1212 may then provide a classification 1222 classifying the one or more features. The features may be classified as one or more of gender, age (e.g., a value or in a range), speaker count, language, location, coordinates, row, seat number, selective words, loudness (e.g., loud, scream, normal), threat scenarios, threat words, events, types of sound, temperament (e.g., aggressive, calm, dangerous, enraged, etc.), a component identifier, and/or a condition of the component (e.g., normal, anomalous, etc.).

Referring now to FIG. 12A, a method 1200a is described, in accordance with one or more embodiments of the present disclosure. The method 1200a may utilize a gender classification model 1212a as shown. The gender classification model 1212a may classify the gender of a speaker. The training of the unusual sound model 1212j may be a multi-step process where samples speeches are collected. The sample speeches are pre-processed for digital conversion, noise elimination, filtering, and transformation. Once the preprocessed speech sample is available, the preprocessed speech sample may be used for feature extraction 1206m for classification. The spectrogram, spectral power density, spectral contrast, Mel Frequency Cepstral and their derivatives are used to differentiate between male voice and female voice in the case of gender. The sample speeches are labelled for male and female speeches and applied to the neural network for training. The inputs are augmented with additional sample and synthetic data to arrive at better accuracy. Once the gender classification model 1212a 1212m is trained, the gender classification model 1212a 1212m may be used in real time for speech processing and detection of speaker's gender. The real time speech may be preprocessed and utilized for features extraction. The extracted features are applied to the trained Gender Classification Model which classifies the gender of the voice as male or female with confidence score. Thus, at least one audio processing device may be configured to analyze the monitored channels of microphone audio data to identify a gender of a speaker captured by a given microphone.

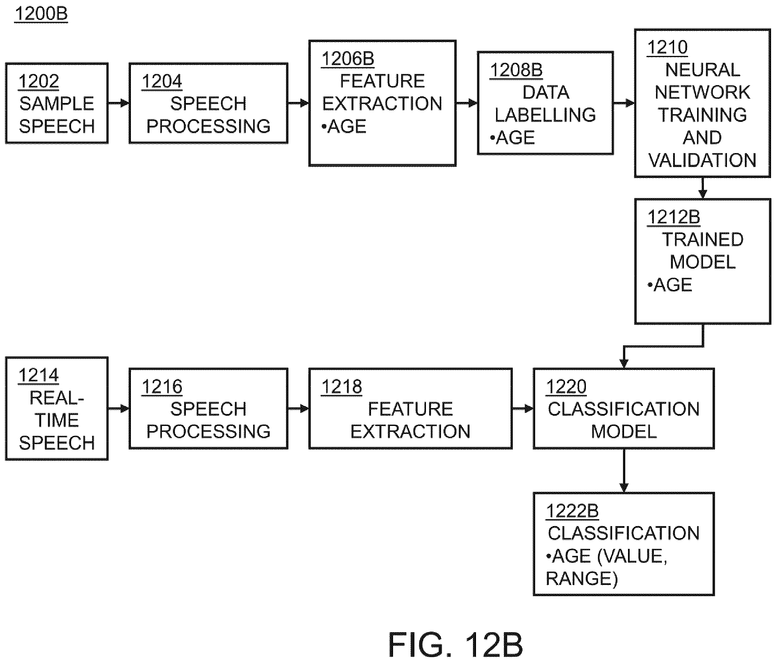

Referring now to FIG. 12B, a method 1200b is described, in accordance with one or more embodiments of the present disclosure. The method 1200b may utilize an age classification model 1212b. The age classification model 1212b may classify the age of a speaker. The regression technique may be utilized for establishing relationship between the features from the speech of the speaker and the age of the speaker for age determination. The age estimation from voice utilizes a pre-trained analytics model. Once the preprocessed speech sample is available, the speech may be used for feature extraction for classification and regression using neural networks. The age estimation requires acoustic features in terms of jitter, shimmers, frequency, pause probability along with MFC (Mel Frequency Cepstral) for age detection and estimation. The sample speeches are labelled for age value, age ranges and applied to the neural network for training. The inputs are augmented with additional sample and synthetic data to arrive at better accuracy. Once the age classification model 1212b is trained, the age classification model 1212b may be used in real time for speech processing and detection of speaker's age value and range. The real time speech may be preprocessed and utilized for features extraction. The extracted features are applied to the trained age classification model 1212m which classifies and regresses the age of the voice with confidence score and provides output in terms of speaker's age value and range. Thus, at least one audio processing device may be configured to analyze the monitored channels of microphone audio data to identify an estimated age of the speaker captured by the given microphone.

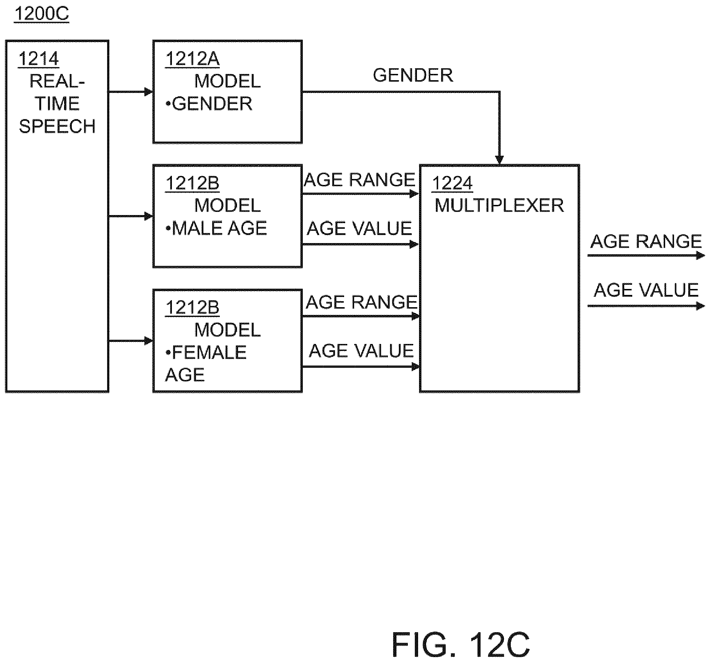

Referring now to FIG. 12C, a method 1200c is described, in accordance with one or more embodiments of the present disclosure. In embodiments, the method 1200c may utilize multiple models including the gender classification model 1212a and two of the age classification models 1212b, one for male voice and another for female voice. For each of the models, the sample speech may be taken and preprocessed for digital conversion, noise elimination, filtering and transformation to make the speech suitable for feature extraction. The age classification model 1212b may be different for the female voice and male voice to improve accuracy. The age classification model 1212b are trained using two different neural networks and regressor using the male voice and female voice separately. During real time analytics to detect the male age or the female age, the respective male or female age detection module output may be selected based on output of the Gender Detection Module with a multiplexer 1224 as shown.

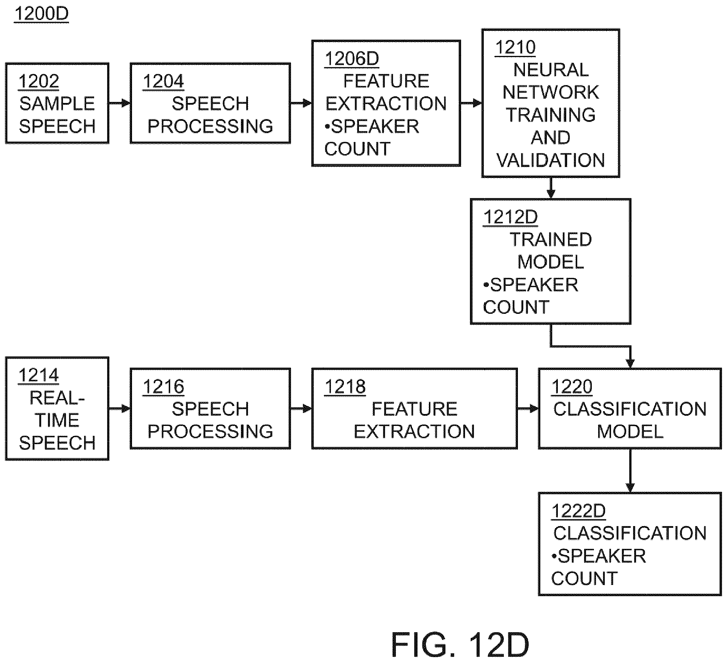

Referring now to FIG. 12D, a method 1200d is described, in accordance with one or more embodiments of the present disclosure. The method 1200d may utilize a speaker counting model 1212d. The speaker counting model 1212d may detect the number of speakers captured in speech. Once the preprocessed speech sample is available, the preprocessed speech sample may be used for feature extraction for count of speakers in terms of density. The feature extraction may include speakers count feature extraction. The sample speeches are used for neural network training. The inputs are augmented with additional sample and synthetic data to arrive at better accuracy. Once the speakers counting model 1212d is trained, the speaker counting model 1212d may be used in real time for speech processing and detection of number of speakers. The real time speech may be preprocessed and utilized for features extraction. The extracted features are applied to the trained speaker counting model 1212d which classifies and regresses the speakers count and provides output in terms of number of speakers. Thus, at least one audio processing device may be configured to analyze the monitored channels of microphone audio data to identify a number of speakers captured by the given microphone.

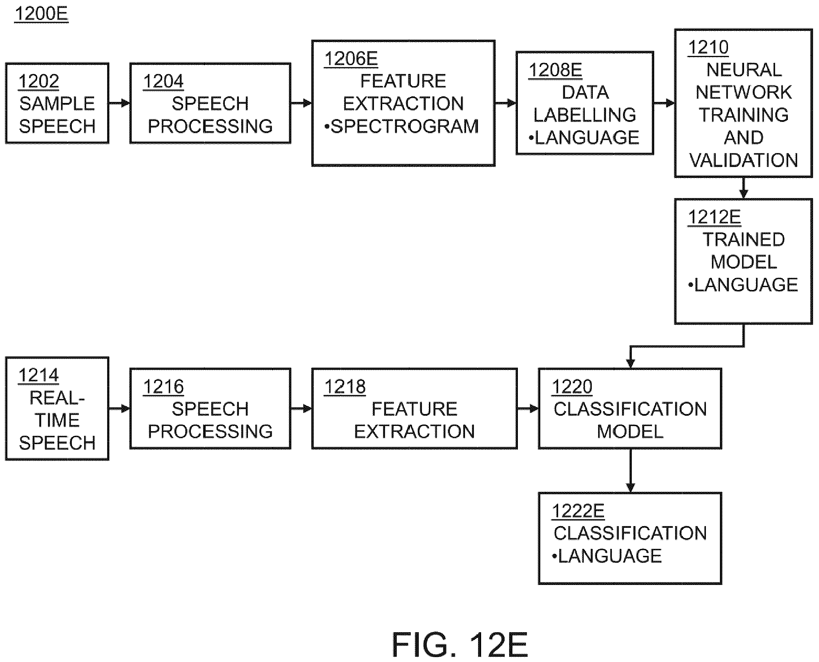

Referring now to FIG. 12E, a method 1200e is described, in accordance with one or more embodiments of the present disclosure. The method 1200e may utilize a language detection model 1212e. Once the preprocessed speech sample is available, the language detection model 1212e may be used for feature extraction in terms of spectrogram for language classification dataset. The feature extraction may include a language detection feature extraction. The sample speeches spectrogram may be labelled for their languages and applied to the neural network for training. The inputs are augmented with additional sample and synthetic data to arrive at better accuracy. The language detection model 1212e may then be used in real time for speech processing and detection of speaker's language. The real time speech may be preprocessed and utilized for features extraction in terms of spectrogram. The spectrogram may be convoluted and applied to the trained language detection model 1212e which classifies the language spoken and provides, the classification 1222e as an output with confidence score of identification. Thus, at least one audio processing device may be configured to analyze the monitored channels of microphone audio data to identify a language of the speaker captured by the given microphone. Additionally, the at least one audio processing device may be configured to analyze the processed audio data and the event report to label portions of the processed audio data as a language of the speaker captured by the given microphone.

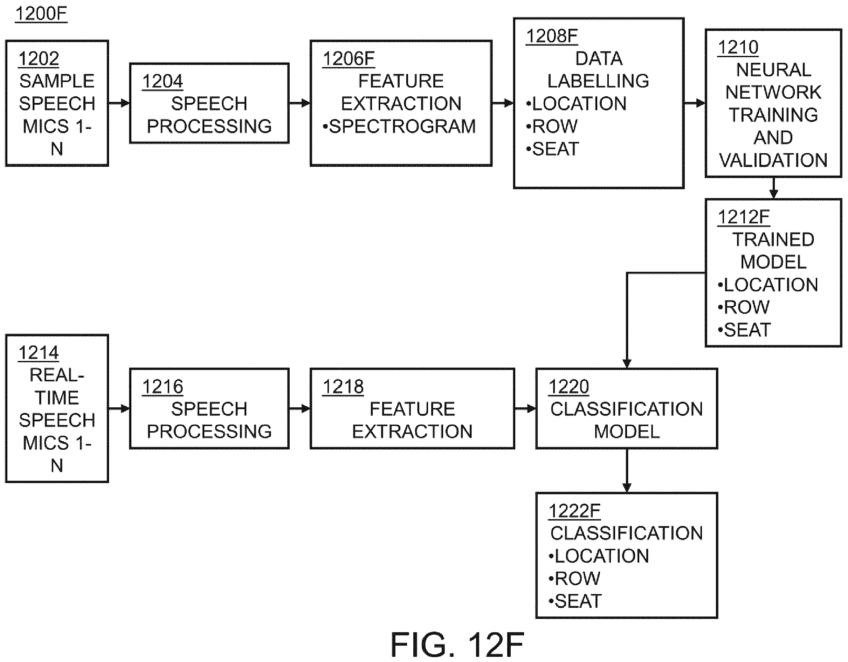

Referring now to FIG. 12F, a method 1200f is described, in accordance with one or more embodiments of the present disclosure. The method 1200f may utilize a location detection model 1212f. The location detection model 1212f may detect the location of a speaker. The output from the array of multiple microphones may be used to detect the location of the speaker. These microphone locations are mapped to the coordinates, seat, row numbers in the aircraft. The location detection model 1212f may be trained to detect the location of the speaker using the speech output from the array of microphone as shown. The training of the location detection model 1212f may be a multi-step process where sample speeches are collected using array of microphone with different locations and coordinates inside the aircraft. Once the preprocessed speech samples from different microphones are available, the preprocessed speech samples are used for feature extraction in terms of spectrogram for location classification dataset. The feature extraction may include location detection feature extraction. The sample speeches spectrograms are labelled for their location and coordinates inside the aircraft including zones, row, and seat numbers and applied to the neural network for training. The spectrogram inputs are augmented with additional sample and synthetic data to arrive at better accuracy. The location detection model 1212f may then be used in real time for speech processing and detection of location of speaker. The real time speech may be preprocessed and utilized for features extraction in terms of spectrogram. The spectrogram may be convoluted and applied to the trained location detection model 1212f which decides the location and provides the output in terms of location inside the aircraft, coordinates, zone, row number, seat number with confidence score. Thus, at least one audio processing device may be configured to analyze the monitored channels of microphone audio data to identify an estimated location of the speaker captured by the given microphone. Additionally, the at least one audio processing device may be configured to analyze the processed audio data and the event report to label portions of the processed audio data as a location of the speaker captured by the given microphone.

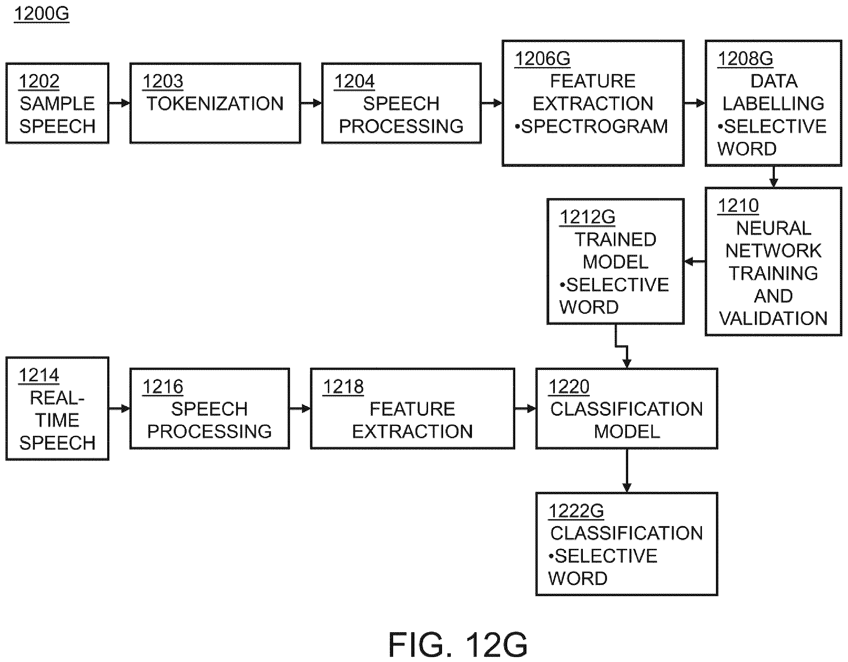

Referring now to FIG.12G, a method 1200g is described, in accordance with one or more embodiments of the present disclosure. The method 1200g may utilize a word detection model 1212g. The word detection model 1212g may detect words used by a speaker. The training of the word detection model 1212g may be a multi-step process where sample words are collected with different languages. Once preprocessing happens the words are extracted using tokenization 1203. Once the preprocessed speech tokenized word samples are available, the preprocessed speech tokenized word samples are used for feature extraction in terms of spectrogram for selective words. The feature extraction may include selective word detection feature extraction. The sample spectrograms for tokenized words are labelled for their texts and applied to the neural network for training. Once the word detection model 1212g is trained, the word detection model 1212g may be used in real time for identifying the selective words in speech. The real time speech may be preprocessed, the speech may be tokenized for words and the features of the words are utilized for selective word detection from the database. The tokenized word spectrogram may be convoluted and applied to the trained selective word analytics model which identifies the word spoken and provides the selective word text as output with confidence score of identification. Thus, at least one audio processing device may be configured to analyze the monitored channels of microphone audio data to identify at least one selective word captured by the given microphone. Additionally, the at least one audio processing device may be configured to analyze the processed audio data and the event report to label portions of the processed audio data as at least one selective word captured by the given microphone.

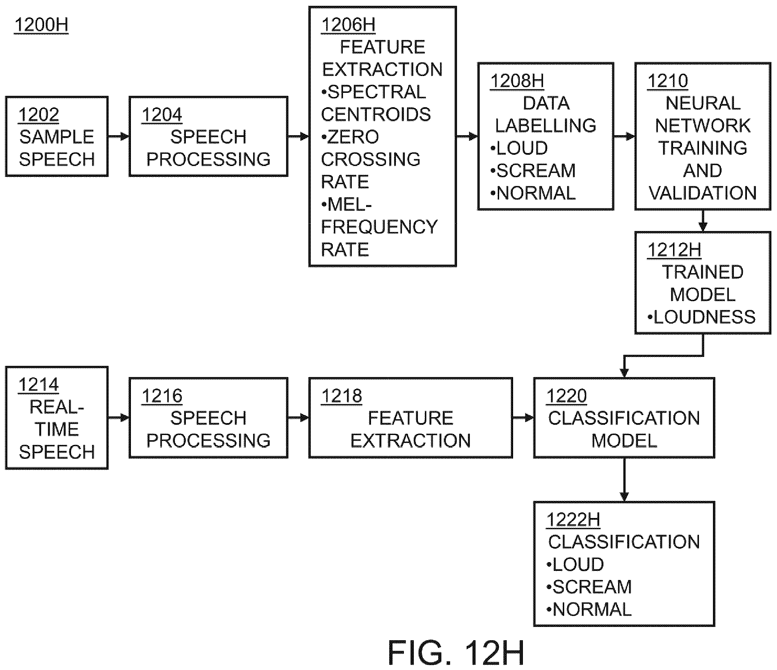

Referring now to FIG. 12H, a method 1200h is described, in accordance with one or more embodiments of the present disclosure. The method 1200h may utilize a loudness detection model 1212h. The loudness detection model 1212h may detect the loudness, screaming or normal tone of voice in the speech using a trained neural network as shown. Spectral Centroids (SC) are used for screaming and shouting detection. Zero crossing Rate (ZCR) may indicate the sound contains no screaming or shouting. Mel-frequency cepstral (MFC) with high energy state may be detected in case of screaming or shouting. Hence, these three features are used to detecting screaming and shouting. The training of the loudness detection model 1212h may be a multi-step process where sample voice may be collected with different pitches like loud, screaming and normal. Once the preprocessed samples are available, the preprocessed samples are used for feature extraction (SC, ZCR and MFC) for the sample. The feature extraction may include selective loudness detection feature extraction. The samples are labelled for their loudness conditions - loud / screaming / normal and applied to the neural network for training. Once the loudness detection model 1212h is trained, the loudness detection model 1212h may be used in real time for identifying the loudness condition - loud / screaming / normal in the real time speech. The real time speech may be preprocessed, the features of the speech (SC, ZCR and MFC) are extracted, convoluted and applied to the trained loudness detection model which classifies the speech as loud/screaming/ normal and provides, the classification 1222h as an output with a confidence score. Thus, at least one audio processing device may be configured to analyze the monitored channels of microphone audio data to identify a loud noise having a predetermined loudness.

Referring now to FIG. 121, a method 1200i is described, in accordance with one or more embodiments of the present disclosure. The method 1200i may utilize a threat scenario model 1212i.The threat scenario model 1212i may detect threat scenarios inside the aircraft cabin. The threat scenarios may include, but are not limited to, untoward incidents like hijacking, mobbing and unruly passengers. The language detection model 1212e and words detection model 1212g may be used to decide the language and to identify the threat words. The language detection model 1212e and words detection model 1212g are used in conjunction with the threat scenario model 1212i to identify the language spoken and to detect the threat words used in the conversation. The detected threat words are also used for raising the confidence scope of the threat scenario. Once the preprocessed speech samples are available, the preprocessed speech samples are used for feature extraction in terms of spectrogram, Spectral Centroids (SC), Zero crossing Rate (ZCR) and Mel-frequency cepstral (MFC) for threat scenarios. The sample spectrograms, Spectral Centroids (SC), Zero crossing Rate (ZCR) and Mel-frequency cepstral (MFC) are labelled for normal vs threat scenarios and applied to the neural network for training. Once the threat scenario model 1212h is trained, the threat scenario model 1212i may be used in real time for identifying the selective words in speech. The real time speech may be preprocessed and the features of the speech are extracted (i.e., spectrogram, Spectral Centroids (SC), Zero crossing Rate (ZCR) and Mel-frequency cepstral (MFC)). The feature may be convoluted and applied to the trained threat scenario model 1212i which identifies normal vs threat scenario and also output the selected words for threat assessment along with confidence score. Thus, at least one audio processing device may be configured to analyze the monitored channels of microphone audio data to identify a threat scenario. Additionally, the at least one audio processing device may be configured to analyze the processed audio data and the event report to label portions of the processed audio data as a threat scenario.

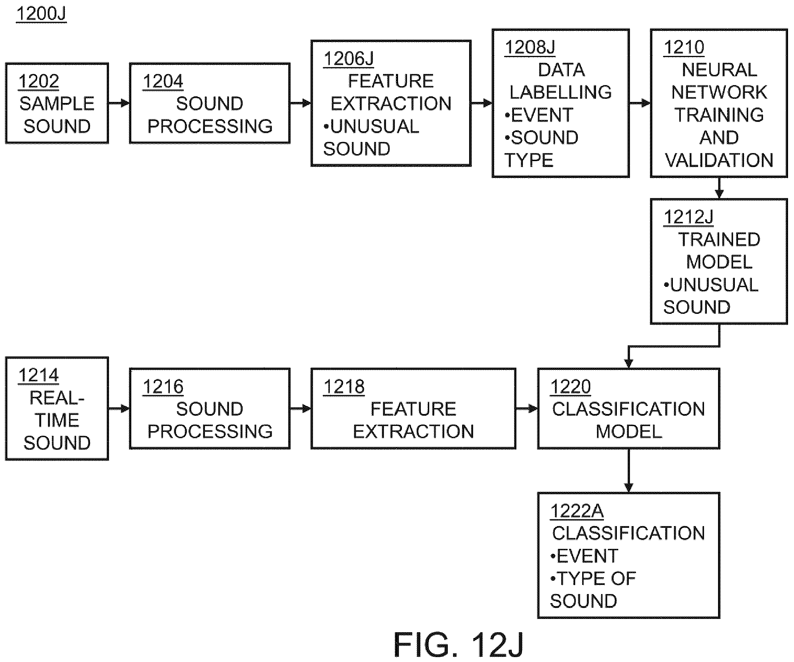

Referring now to FIG. 12J, a method 1200j is described, in accordance with one or more embodiments of the present disclosure. The method 1200j may utilize an unusual sound model 1212j.The unusual sound model 1212j may detect unusual sound. The unusual sounds may include, but are not limited to, thud, bang, breaking, cracking, falling, clanking, vibrations, and the like. The unusual sounds are detected using a trained neural network as shown. This detection may be done by capturing the unusual energy level present in these sounds and passing them through the unusual sound model 1212j to detect the unusual event and type of event. The training of the unusual sound model 1212j may be a multi-step process where sample sounds of events like thud, bang, breaking, cracking, falling, clanking, vibrations, and the like are collected from different sources and parts of the aircraft. Once the preprocessed unusual sound samples are available, the preprocessed unusual sound samples are used for feature extraction in terms of spectrogram for selective events. The feature extraction may include selective event detection feature extraction. The sample spectrograms are labelled for normal vs unusual event and the specific events like thud, bang, breaking, cracking, falling, clanking, vibrations, and the like are applied to the neural network for training. Once the unusual sound model 1212j is trained, the unusual sound model 1212j may be used in real time for identifying the normal vs unusual event and the specific events like thud, bang, breaking, cracking, falling, clanking, vibrations, and the like. The real time sound may be preprocessed, the features of the sound may be utilized for spectrogram generation with respect to energy the sound contains. The spectrogram may be convoluted and applied to the trained unusual sound model 1212j which identifies if there's any unusual event that has happened and the type of event like thud, bang, breaking, cracking, dashed, fallen, clanking, vibration. The scenario and type of event are output with confidence score of identification. Thus, at least one audio processing device may be configured to analyze the processed audio data and the event report to label portions of the processed audio data as an unusual sound captured by a given microphone.

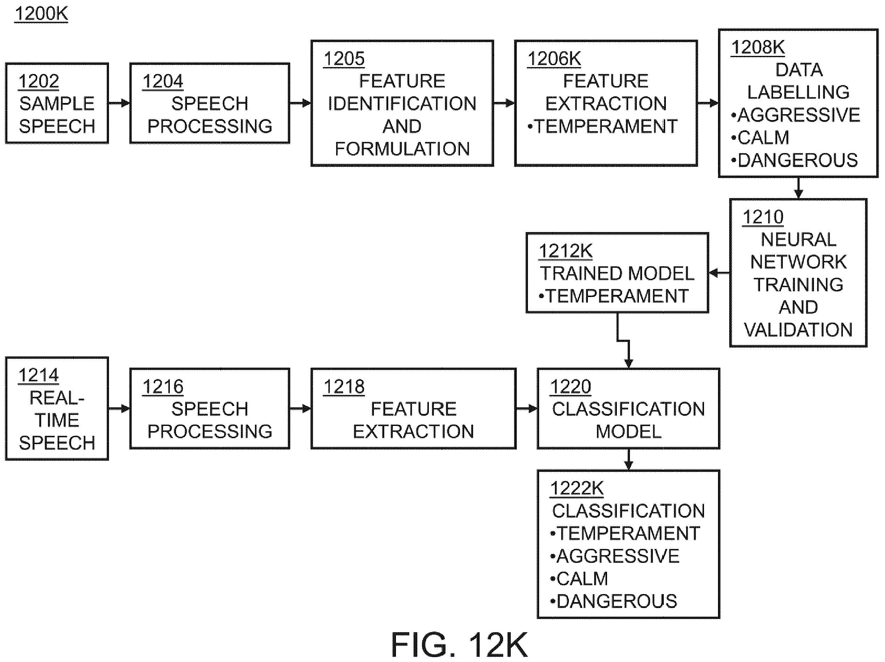

Referring now to FIG. 12K, a method 1200k is described, in accordance with one or more embodiments of the present disclosure. The method 1200k may utilize a temperament detection model 1212k. The temperament detection model 1212k may determine a temperament of a speaker. Machine learning may be applied to derive a temperament of speaker from audio characteristics like silence, loudness, jitter, shimmer, words used, and the like. The features are derived out of different voice samples from different speakers and used for training the neural network as learning phase. The features may include features such as MFC, Spectral energy, Centroid, Roll, Slope, Entropy, Root mean square, Sharpness, Skewness, Kurtosis, as well as features derived from the previously described features. Once the learning is performed, the temperament detection model 1212k may be used to detect the temperament of speaker in real time as shown. The training of the temperament detection model 1212k may be a multi-step process where sample speeches are collected from different users and also from a variety of events like attack, theft, hijacking, and the like. Once the preprocessed speech samples are available, the preprocessed speech samples are used to decide the standard and customized features required for temperament detection. The features may include selective temperament detection feature extraction. Once the features are decided these features are used to label the sample speeches for different types of temperaments like violent, aggressive, calm, confident, perturbed, dangerous, and the like. These labeled sample speeches are applied to the neural network for training. Once the temperament detection model 1212k is trained, the temperament detection model 1212k may be used in real time for classifying the temperament of the speaker. The real time speech may be preprocessed the features of the speeches are utilized for temperament detection. The speech may be applied to the trained temperament detection model 1212k which identifies the temperament of the speaker and provides the output with confidence score. Thus, at least one audio processing device may be configured to analyze the processed audio data and the event report to label portions of the processed audio data as a temperament of a speaker captured by the given microphone.

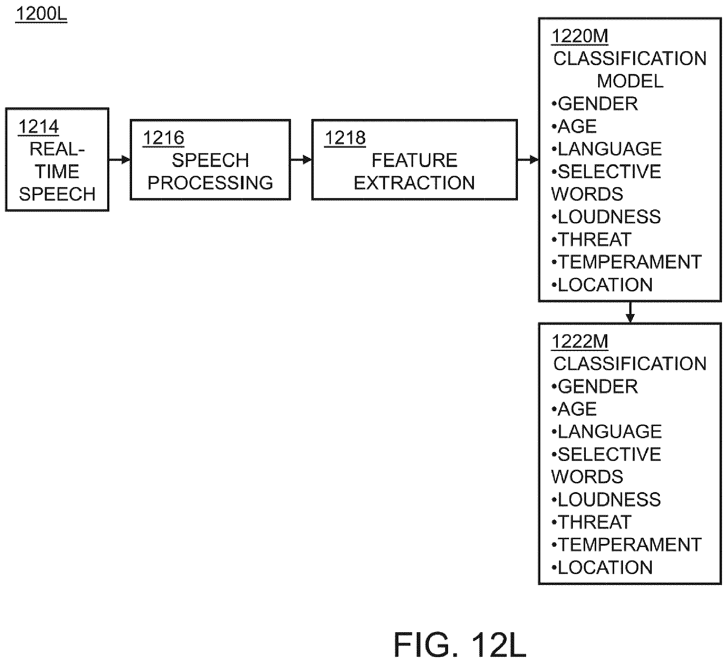

Referring now to FIG. 12L, a method 1200m is described, in accordance with one or more embodiments of the present disclosure. The method 1200m may utilize a speaker profile model 1220m. The speaker profile model 1220m may determine a profile of a speaker. The profile of a passenger may represent different attributes of the speaker. For example, the attributes may include behavior, temperament, risk to the safety of crew and passengers, words spoken, language, age, gender, locations / coordinates inside the aircraft cabin, and the like. The output from different analytic models may be taken and aggregated to generate the profile of the speaker as shown. The different speaker profiles are generated and applied to the trained speaker profile model 1220m. The speaker profile model 1220m may then detect and identify the profile of risky passengers. The speaker profile model 1220m may then notify the crew for monitoring of the risky passenger. The speaker profile model 1220m may be a neural network-based module which may be trained over period of time based on scenario of incidents and the condition of features identified for such passengers. Thus, at least one audio processing device may be configured to analyze the processed audio data and the event report to label portions of the processed audio data as a speaker profile.

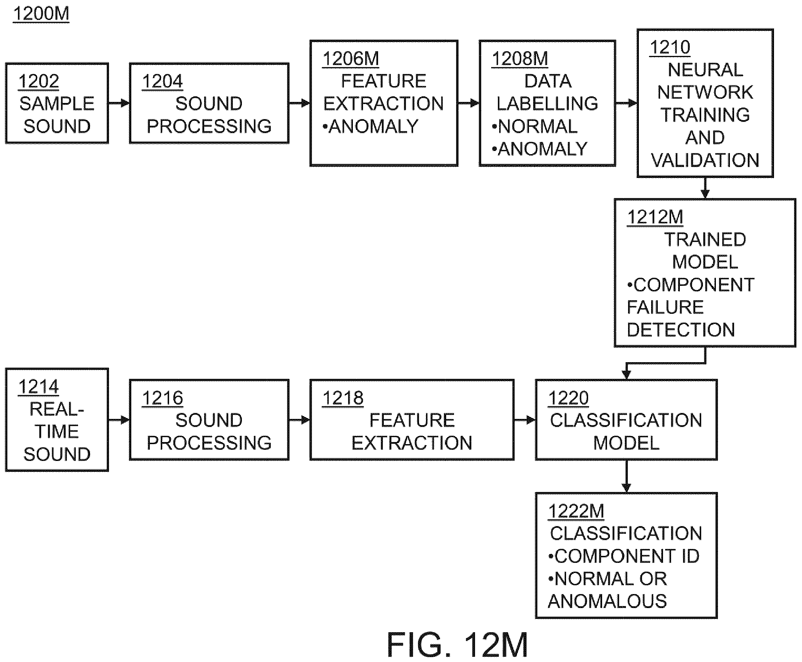

Referring now to FIG. 12M, a method 1200m is described, in accordance with one or more embodiments of the present disclosure. The method 1200m may utilize an anomalous sound detection model 1212m. The anomalous sound detection model 1212m may detect any anomalous sound coming out of different LRUs (line replaceable units), systems or components. The different failure modes of the failing LRUs, systems or components are identified and the acoustic properties / sound coming from them are recorded for both failure conditions and normal conditions. These sample data are used to train the system failure detection analytics module made up of neural network as shown. The neural networks used are artificial neural networks with multiple layers. The training of the anomalous sound detection model 1212m may be a multi-step process where sample sound of the different line replaceable units (LRUs), systems, and/or components are collected with different working condition of normal and malfunctioning with different scenarios and failure conditions. Once the preprocessed sample sound is available, the sound sample may be used for feature extraction in terms of spectrogram for the identification and different working condition of normal and malfunctioning with different scenarios of failure conditions of the line replaceable units (LRUs), systems, and/or components. The features may include an anomalous sound detection feature extraction. The sample sound spectrogram may be labelled for their line replaceable units (LRUs), systems, and/or components with different scenarios of normal functioning and failure conditions. The labelled sound spectrogram may be applied to the neural network for training. The inputs are augmented with additional sample and synthetic data to arrive at better accuracy.

Once the anomalous sound detection model 1212m is trained, the anomalous sound detection model 1212m may be used in real time for LRUs / Systems / Components identification and different working condition of normal and malfunctioning with different scenarios of failure conditions. The real time sound may be preprocessed and utilized for features extraction in terms of spectrogram. The spectrogram may be convoluted and applied to the trained anomalous sound detection model 1212m. The anomalous sound detection model 1212m may classifies the LRUs / Systems / Components from where sound is coming. The anomalous sound detection model 1212m may also provide the working condition of the LRUs / Systems / Components in terms of normal functioning or malfunctioning with identification of failure conditions along with a confidence score. The different anomalous sounds detected may include: Engine Rattling, Engine Cranking, Loose Fan cowl, Damaged Engine Blades, Engine Exhaust, Damaged Tires, Damaged Wheels and Brakes, Potable Water System Compressor Malfunction, Environmental Control System Inflow and Outflow Valve Function, Environment Control System Compressors Malfunction, Loose connections, Loose Rivets, Damaged Surface, Structural Damages, Windshield Cracking, Landing Gear Deployment and Retraction, Actuators movement, Electrical Motor, Gear Failures, and the like. Thus, at least one audio processing device may be configured to analyze the processed audio data and the event report to label portions of the processed audio data as an aircraft system failure.

Referring generally again to FIGS. 1-12M, as will be appreciated from the above, embodiments of the inventive concepts disclosed herein may be directed to a system and a method configured to provide audio analytics onboard and/or offboard of an aircraft for safety and surveillance of an aircraft cabin.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
an array (104) of audio devices (202) installed in an aircraft cabin of an aircraft (102), each of the audio devices comprising a microphone, wherein each of the audio devices is configured to output microphone audio data on a channel; and
at least one audio processing device (108) communicatively coupled to the array of audio devices, the at least one audio processing device installed in the aircraft, the at least one audio processing device configured to receive the microphone audio data from each of the array of audio devices, each of the at least one audio processing device comprising at least one processor, wherein the at least one audio processing device is configured to:
monitor the channel of microphone audio data from each of at least two of the audio devices;
analyze the monitored channels of microphone audio data to identify at least one of: a gender of a speaker captured by a given microphone, an estimated age of the speaker captured by the given microphone, a number of speakers captured by the given microphone, a language of the speaker captured by the given microphone, an estimated location of the speaker captured by the given microphone, at least one selective word captured by the given microphone, a loud noise having a predetermined loudness, or a threat scenario;
identify an event to be an occurrence of a predetermined event based at least on the analyzing of the monitored channels of microphone audio data;
based at least on the identified event and the analyzing of the monitored channels of microphone audio data, generate an event report associated with at least one channel of microphone audio data associated with the identified event;
output the event report to a crew panel (112); and
output at least a portion of microphone audio data of the at least one channel of microphone audio data associated with the identified event to the crew panel.

2. The system of claim 1, further comprising in-flight entertainment, IFE, devices installed in the aircraft cabin, wherein at least some of the array (104) of audio devices (202) are the IFE devices.

3. The system of claim 1 or 2, wherein the at least one audio processing device (108) is further configured to: based at least on the monitoring of the channel of microphone audio data from at least two of the audio devices (202), assign a severity level of a plurality of severity levels to a portion of the channel of the microphone audio data from at least two of the audio devices, wherein the plurality of severity levels are predetermined severity levels and include a highest severity level and at least one other severity level, each of the at least one other severity level having a relative severity that is less than the highest severity level; and optionally, wherein the at least one audio processing device is further configured to: store the portion of the channel of microphone audio data from at least two of the audio devices for a particular duration based on the assigned severity level, wherein a particular portion having an assigned highest severity level is stored longer than another portion having another assigned severity level.

4. The system of any preceding claim, wherein the at least one audio processing device (108) is further configured to: output a command, to at least one of the array (104) of audio devices (202), to enable or disable at least one audio stream of at least one microphone of the at least one of the array of audio devices; and/or wherein the audio processing device is a line replaceable unit, LRU.

5. The system of any preceding claim, wherein the event report includes information of an event type, a location of the event in the aircraft cabin, and a severity level of the event.

6. The system of any preceding claim, wherein the at least one audio processing device (108) is further configured to: based at least on the identified event and the analyzing of the monitored channels of microphone audio data, generate a threat alarm associated with the identified event; and output the threat alarm to the crew panel (112).

7. The system of claim 1, wherein the at least one audio processing device (108) is further configured to: enhance an audio quality of the monitored channels of microphone audio data; and optionally, wherein the at least one audio processing device is further configured to: enhance the audio quality of the monitored channels of microphone audio data by performing noise cancellation operations on the monitored channels of microphone audio data to remove background noise.

8. The system of any preceding claim, wherein the at least one processor comprises at least one of: at least one central processing unit, CPU, at least one graphics processing unit, GPU, at least one field-programmable gate array, FPGA, at least one application specific integrated circuit, ASIC, at least one digital signal processor, at least one controller, or at least one deep learning processor unit, DPU, wherein at least some of the at least one processor forms at least one neural network.

9. The system of any preceding claim, further comprising at least one second audio processing device (110),
wherein the at least one audio processing device (108) is further configured to: output processed audio data to the at least one second audio processing device, the processed audio data having been processed from the monitored channels of microphone audio data; and output the event report to the at least one second audio processing device; and
wherein each of the at least one second audio processing device comprises at least one processor, wherein the at least one second audio processing device is configured to:
analyze the processed audio data and the event report to label portions of the processed audio data as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure;
store the labeled portions of the processed audio data; and
output at least some of the labeled portions of the processed audio data to a crew panel (112) or an offboard device.

10. A system, comprising:
at least one audio processing device (108, 110), each of the at least one audio processing device comprising at least one processor, wherein the at least one audio processing device is configured to:
obtain or generate processed audio data, the processed audio data having been processed from monitored channels of microphone audio data from an array of audio devices, the array of audio devices installed in an aircraft cabin of an aircraft, each of the audio devices comprising a microphone, wherein each of the audio devices is configured to output microphone audio data on a channel;
obtain or generate an event report associated with at least one channel of microphone audio data associated with an identified event, the identified event to being an occurrence of a predetermined event;
obtain or generate at least a portion of the processed audio data of the at least one channel of microphone audio data associated with the identified event;
analyze the processed audio data and the event report to label portions of the processed audio data as at least one of: a threat scenario, an unusual sound captured by a given microphone, at least one selective word captured by the given microphone, a temperament of a speaker captured by the given microphone, a speaker profile, a language of the speaker captured by the given microphone, a location of the speaker captured by the given microphone, or an aircraft system failure;
store the labeled portions of the processed audio data; and
output at least some of the labeled portions of the processed audio data to a crew panel (112) or an offboard device (118).

11. The system of claim 10, wherein the at least one audio processing device (108, 110) is further configured to: output the at least some of the labeled portions of the processed audio data to the crew panel based on a severity level of a plurality of severity levels, wherein the plurality of severity levels are predetermined severity levels and include a highest severity level and at least one other severity level, each of the at least one other severity level having a relative severity that is less than the highest severity level; and/or wherein the at least one audio processing device is further configured to: update the event report based at least on the labeled portions of the processed audio data; and output the updated event report to the crew panel (112) or the offboard device (118).

12. The system of claim 10 or 11, wherein the at least one audio processing device (108, 110) is further configured to: based at least on the labeled portions of the processed audio data, generate a threat alarm associated with at least one of the labeled portions; and output the threat alarm to the crew panel (112).

13. The system of claim 10, 11 or 12, wherein the at least one audio processing device (108, 110) is further configured to: enhance an audio quality of the labeled portions of the processed audio data; and optionally, wherein the at least one audio processing device is further configured to: enhance the audio quality of the labeled portions of the processed audio data by performing noise cancellation operations on the labeled portions of the processed audio data to remove background noise.

14. The system of any of claims 10 to 13, wherein the at least one audio processing device (108, 110) is further configured to: generate a textual transcript corresponding to at least one of the labeled portions of the processed audio data, and output the textual transcript to the crew panel (112) or the offboard device (118).

15. The system of any of claims 10 to 14, wherein the at least one processor comprises at least one of: at least one central processing unit, CPU, at least one graphics processing unit, GPU, at least one field-programmable gate array, FPGA, at least one application specific integrated circuit, ASIC, at least one digital signal processor, at least one controller, or at least one deep learning processor unit, DPU, wherein at least some of the at least one processor forms at least one neural network.
